# EUROPÄISCHE PATENTSCHRIFT

(11) **EP 3 853 189 B1**
(45) Veröffentlichungstag und Bekanntmachung des Hinweises auf die Patenterteilung: **07.06.2023**
(21) Anmeldenummer: 19772680.5
(22) Anmeldetag: 16.09.2019
(51) Int. Cl.: C05F 11/00

(54) **DÜNGEMITTELTRÄGERSTOFF, VERFAHREN ZUR HERSTELLUNG EINES DÜNGEMITTELS UND DÜNGEMITTEL**
FERTILIZER CARRIER, METHOD FOR PRODUCING A FERTILIZER, AND FERTILIZER
MATIÈRE SUPPORT D'ENGRAIS, PROCÉDÉ POUR PRODUIRE UN ENGRAIS ET ENGRAIS

(30) Priorität: 21.09.2018 DE 102018123304
(43) Veröffentlichungstag der Anmeldung: 28.07.2021
(73) Patentinhaber: Jassen - Kunststoffzentrum GmbH - Apparatebau, Zuschnitte und Formung, 79585 Steinen (DE)
(72) Erfinder: JASSEN, Hartmut, 79585 Steinen (DE); ILLENBERGER, Bernhard, 79585 Steinen (DE)
(74) Vertreter: Mertzlufft-Paufler, Cornelius
(86) Internationale Anmeldenummer: PCT/EP2019/074692
(87) Internationale Veröffentlichungsnummer: WO 2020/058183

(56) Entgegenhaltungen:
- WO-A1-2014/203121
- WO-A2-98/05608
- WO-A2-2015/145442
- CN-A- 106 831 123
- DE-A1-102012 002 871

## Beschreibung

Die Erfindung betrifft einen Düngemittelträgerstoff, ein Verfahren zur Herstellung eines Düngemittels und ein Düngemittel.

Pflanzennährstofflösungen, die zum größtenteils aus Wasser bestehen, weisen den Nachteil auf, dass diese relativ unbrauchbar für den Einsatz im konventionellen Ackerbau sind, da die Pflanzennährstofflösungen aufgrund des hohen Wasseranteils ein zu hohes Gewicht aufweisen, um wirtschaftlich über größere Strecken transportierbar zu sein. Zudem ist die Lagerung der Pflanzennährstofflösungen aufwändig, da sie ein relativ großes Volumen aufweisen und aufgrund des Wasseranteils die Haltbarkeit eingeschränkt sein kann.

Andererseits weisen konventionelle Dünger häufig den Nachteil auf, dass enthaltene Nährstoffe, wie beispielsweise Nitrat, zu schnell abgegeben werden, was dazu führen kann, dass es aufgrund der in der Regel gegebenen hohen Löslichkeit der Nährstoffe zu einer unkontrollierten Auswaschung kommt. Dadurch kann es zu negativen Auswirkungen auf die Umwelt kommen. Beispielsweise kann eine Auswaschung zu einer Nitratbelastung von Gewässern bzw. des Grundwassers führen.

Pflanzen benötigen jedoch eine ausreichende Versorgung mit pflanzenverfügbaren Nährstoffen, wie pflanzenverfügbarem Stickstoff. Wie bereits zuvor erwähnt, besteht hierbei jedoch das Problem, dass pflanzenverfügbare Nährstoffe in der Regel auch besonders wasserlöslich sind, so dass sie durch die Pflanzen aufgenommen werden können.

Vor diesem Hintergrund werden Nitrifikations- und Ureasehemmer als Agrarhilfsstoffe entwickelt und eingesetzt, die die Zeitspanne zur Stickstoffquellen-Ausnutzung für die Pflanze verlängern sollen. Unabhängig von der Wirkungseffizienz von Nitrifikations- und Ureasehemmern ist unstrittig, dass diese biologisch schwer abbaubar sind und nicht zur Hydrolyse neigen. Damit sind negative Auswirkungen auf die Boden- und Wasserqualität nicht auszuschließen.

Der Düngemittelträgerstoff ist zur Speicherung und Abgabe von Nährstoffen aus einer Pflanzennährstofflösung, die zum Beispiel aus recycelten Pflanzen- und Lebensmittelabfällen und/oder aus Rest- bzw. sekundären Rohstoffen der Lebensmittel-, Genuss- und Futtermittelindustrie gewonnen wurde, geeignet.

Dabei kann es vorgesehen sein, dass es nach einer Bewässerung des Düngemittelträgerstoffs nicht zu einer Initialabgabe einer Mehrheit der gespeicherten Nährstoffe kommt, sondern dass die Nährstoffe zeitabhängig in Teilbeträgen an die Umgebung abgegeben werden. Der Begriff "Initialabgabe" kann sich dabei auf eine erste Abgabe von Nährstoffen nach Behandlung des Düngemittelträgerstoffs mit Wasser beziehen.

Der Begriff "pflanzenverfügbare Nährstoffe" bezieht sich dabei auf Nährstoffe, die von einer Pflanze direkt aufgenommen werden können und nicht erst durch weitere Prozesse, wie beispielsweise biologische Abbauprozesse, umgebaut werden müssen, um durch die Pflanzen aufgenommen werden zu können. Bei den pflanzenverfügbaren Nährstoffen handelt es sich um Nährstoffionen.

Der Begriff "biologisch abbaubar" kann sich auf die Eigenschaft beziehen, dass der Düngemittelträgerstoff und/oder das Düngemittel durch Lebewesen, insbesondere durch Saprobionten, und/oder deren Enzyme zersetzbar ist. Insbesondere kann der metabolische Abbau des Düngemittelträgerstoffs und/oder des Düngemittels dabei vollständig bis zu einer Mineralisierung verlaufen, also insbesondere bis dahin verlaufen, dass die organischen Verbindungen des Düngemittelträgerstoffs und/oder des Düngemittels bis hin zu anorganischen Stoffen, wie Kohlendioxid und/oder Sauerstoff und/oder Ammoniak zerlegt sind. Der Zerfallsprozess darf jedoch die Abgabe der Nährstoffionen nicht negativ beeinflussen. Als negativ wäre ein Zerfall anzusehen, der zu einer sofortigen unkontrollierten Freigabe der gespeicherten Nährstoffionen führt und/oder ein Zerfall der zu einem Umbau der Nährstoffionen (wie z. B. bei einer Denitrifikation) vor Aufnahme durch die Pflanzenwurzeln führt. Ob ein Düngemittelträgerstoff und/oder ein Düngemittel biologisch abbaubar ist/sind, lässt sich bevorzugt durch einen Nachweis der Kompostierbarkeit bestimmen. In diesem Zusammenhang wird auf die EN Norm EN 13432 verwiesen, worin eine Nachweismethode definiert ist. Insbesondere kann demnach ein Düngemittelträgerstoff und/oder ein Düngemittel als biologisch abbaubar gelten, wenn mindestens 90% des organischen Materials in drei Monaten, vorzugsweise in sechs Monaten, in CO₂ und/oder Wasser und/oder Mineralien umgewandelt sind. Der angegebene Zeitraum kann sich auf einen Abbauprozess in einer Industriekompostierungsanlage, vorzugsweise bei ca. 60 Grad Celsius, beziehen. Alternativ oder ergänzend dazu kann sich biologisch abbaubar auf eine Desintegrationsrate beziehen, wobei nach drei Monaten, vorzugsweise nach 6 Monaten, bei einer Absiebung der Abbauprodukte durch ein 2 mm Sieb nicht mehr als 10% bezogen auf die Gesamtmasse der Abbauprodukte durch das Sieb zurückgehalten werden. Düngemittelträgerstoffe und/oder Düngemittel die eine negative Wirkung auf den Abbauprozess haben, wie insbesondere eine wenigstens teilweise biozide und/oder wachstumshemmende Wirkung auf Lebewesen, die für den Abbauprozess verantwortlich sind, können nicht als biologisch abbaubar angesehen werden. Zudem dürfen die Abbauprodukte selbst keine negativen, also insbesondere keine biozide und/oder toxische Wirkungen auf Abbauprozesse haben, da diese im mit dem Düngemittelträgerstoff und/oder dem Düngemittel behandelten Boden zurückbleiben. Besonders bevorzugt müssen alle der zuvor genannten Erfordernisse kumulativ erfüllt sein, damit der Düngemittelträgerstoff und/oder das Düngemittel als biologisch abbaubar gilt.

Die WO 2014/203121 A1 offenbart ein Verfahren zur Behandlung einer Pflanze oder eines Pilzes, wobei eine Lösung, die Wasser umfasst, bereitgestellt wird, wobei ein nanofibrilliertes Polysaccharid zu der Lösung zugegeben wird, wodurch eine Suspension gebildet wird, wobei die Konzentration des nanofibrilierten Polysaccharids in der Suspension zwischen 1,5-30 Gewichtsprozent liegt und wobei die Pflanze oder der Pilz der Suspension ausgesetzt werden, um die Pflanze oder den Pilz mit Wasser zu versorgen.

Die WO 2015/145442 A2 offenbart Verwendungen von Nanomaterialien auf Cellulosebasis bei der Herstellung von absorbierenden Materialien oder von Einkapselungsmaterialien zum Absorbieren, Tragen oder Einkapseln einer Vielzahl von Wirkstoffen.

Der Erfindung liegt daher die Aufgabe zugrunde einen Düngemittelträgerstoff und/oder ein Düngemittel zur Speicherung und Abgabe von Wasser und pflanzenverfügbaren Nährstoffen bereitzustellen, wobei der Düngemittelträgerstoff und/oder das Düngemittel biologisch abbaubar ist/sind, insbesondere vollständig biologisch abbaubar ist/sind und/oder aus nachwachsenden Rohstoffen, also biobasiert, hergestellt ist/sind.

Der Erfindung liegt weiterhin die Aufgabe zu Grunde, pflanzenverfügbare Nährstoffe in einem streufähigen, trockenen Düngemittel bereitzustellen.

Der Begriff "trocken" kann sich dabei auf einen Gesamtwassergehalt von maximal 15 Masse-%, insbesondere von maximal 12,5 Masse-%, insbesondere von maximal 10 Masse-%, insbesondere von maximal 7,5 Masse-%, insbesondere von maximal 5 Masse-%, insbesondere von maximal 2,5 Masse-%, insbesondere von maximal oder weniger als 1,0 Masse-%, am Düngemittelträgerstoff, insbesondere vor Behandlung mit einer Pflanzennährstofflösung, und/oder am Düngemittel beziehen.

Die Aufgabe/n werden erfindungsgemäß durch die Merkmale des unabhängigen Anspruchs 1 gelöst. Insbesondere wird zur Lösung der oben genannten Aufgabe/n ein Düngemittelträgerstoff vorgeschlagen, der zur Speicherung durch Adsorption und zur Abgabe von Wasser und pflanzenverfügbaren Nährstoffen geeignet ist, umfassend einen Anteil an wenigstens einem Pflanzenblattpolymer (abgekürzt PBP) und einen Anteil an Bakteriencellulose (abgekürzt BC), wobei der Düngemittelträgerstoff biologisch abbaubar ist. Vorzugsweise kann der Düngemittelträgerstoff vollständig biologisch abbaubar sein. Insbesondere kann eine Speicherung von pflanzenverfügbaren Nährstoffen, wie beispielsweise Nährstoffionen, durch Adsorption an der Oberfläche des Düngemittelträgerstoffs, insbesondere an den inwendigen und/oder außenliegenden Oberflächen, erfolgen. Die Verwendung von Pflanzenblattpolymeren hat den Vorteil, dass eine besonders ökologische und nachhaltige Ressourcennutzung zur Herstellung des Düngemittelträgerstoffs möglich ist. Des Weiteren weisen Pflanzenblattpolymere eine besonders geeignete, relativ hohe Sorptionskinetik auf, um pflanzenverfügbare Nährstoffe schnell zu binden und um anschließend die gespeicherten Nährstoffe nach Kontakt des Düngemittelträgerstoffs mit Wasser nicht direkt vollständig und/oder nicht mehrheitlich abzugeben. Pflanzenblattpolymere können je nach der als Ausgangsstoff gewählten Pflanzenart und Wachstums- oder Vegetationsphase aus unterschiedlichen Anteilen der Hauptkomponenten Cellulose, Hemicellulose und/oder Lignin bestehen. Diese heterogene Struktur schafft für die Nährstoffionen eine große Zahl an Fehlstellen, Kanten, Gitterstörungen, Fremdatome und zugängliche funktionelle Gruppen zur Anlagerung und Bindung.

Erfindungsgemäß ist vorgesehen, dass das wenigstens eine Pflanzenblattpolymer wenigstens eines oder eine Kombination aus mehreren ausgewählt aus der Gruppe aus pflanzlicher Cellulose und/oder Hemicellulose und/oder Lignin ist, und dass das Pflanzenblattpolymer einen Massenanteil an einem Chlorophyllabbauprodukt non-fluorescent chlorophyll catabolites (NCC) von 0,6 Masse-% bis 1,2 Masse-% in Trockensubstanz aufweist.

Pflanzenblattpolymere weisen Mikrofibrillen auf, welche ein hohes Bindungspotenzial von Nährstoffen, insbesondere Stickstoff, haben. Durch Mikrofibrillen verbundene Zellwandreste schaffen ein geeignetes Bindungspotenzial. Bei der Benetzung des Pflanzenblattpolymers mit einer wässrigen Pflanzennährstofflösung treten die Nährstoffionen in Wechselwirkung mit der Oberfläche des Pflanzenblattpolymers, werden also adsorbiert. Schwache Wechselwirkungen, insbesondere Van-der-Waals-Wechselwirkungen, treten zwischen ungeladenen Teilen des Pflanzenblattpolymers und ungeladenen Molekülen der Pflanzennährstofflösung auf. Sie finden sowohl zwischen permanenten Dipolen als auch zwischen Dipolen und Molekülen ohne permanentes Dipolmoment durch Induktion eines Dipols und schließlich durch gegenseitige Induktion von Dipolen zwischen zwei Molekülen ohne eigenen Dipol statt. Stärkere Wechselwirkungen, insbesondere Wasserstoffbrückenbindungen, treten zwischen an elektronegativen Atomen gebundenen Protonen und elektronegativen Atomen mit einem freien Elektronenpaar auf. Starke Wechselwirkungen, insbesondere ionische Wechselwirkung, finden zwischen zwei unterschiedlich geladenen Molekülen statt und beruhen auf der Coulomb-Kraft.

Bakterielle Cellulose weist ein enges dreidimensionales Netzwerk von Mikrofibrillen auf, die neben der Bindungsfähigkeit der Nährstoffionen aufgrund einer überwiegend vorhandenen kristallinen Struktur für eine sehr hohe Flüssigkeitsaufnahmefähigkeit und für mechanische Festigkeit und Formstabilität des Düngemittelträgerstoffs sorgt.

Die Adsorption/Desorption der Nährstoffionen ist durch anteilig unterschiedliche Kombinationen von Pflanzenblattpolymer und Bakteriencellulose beeinflussbar. Dies gilt ebenso für die Flüssigkeitsaufnahmefähigkeit und den Ab- bzw. Rückbau des Düngemittelträgerstoffs im Boden. Durch die Kombination von Pflanzenblattpolymer und Bakteriencellulose ergibt sich eine für den Adsorptionsprozess der Nährstoffionen wichtige Mikro-, Meso- und Makroporenstruktur, die eine hohe Beladungskapazität mit einer steuerbarer Entladekapazität ermöglicht. Die Desorption stellt eine Umkehrung der Sorption (Adsorption) dar und bezieht sich auf einen Vorgang, bei dem Nährstoffe (Ionen) von einer Oberfläche des Düngemittelträgerstoff entlassen werden.

Der Düngemittelträgerstoff stellt somit ein Komposit aus Pflanzenblattpolymer und Bakteriencellulose dar, womit die Nährstoffe beispielsweise aus einer damit vermischten Pflanzennährstofflösung speicherbar sind und nach Speicherung der Nährstoffe ein Wasseranteil des Gemisches gezielt verringerbar ist, um ein trockenes oder nahezu trockenes Düngemittel zu erhalten.

Nachfolgend werden vorteilhafte Ausgestaltungen der Erfindung beschrieben, die allein oder in Kombination mit den Merkmalen anderer Ausgestaltungen zusammen mit den Merkmalen nach Anspruch 1 kombiniert werden können.

Gemäß einer Ausgestaltung kann es vorgesehen sein, dass die Bestandteile des Düngemittelträgerstoffes und/oder des daraus hergestellten Düngemittels zu 100% biobasiert sind. Eine Bestimmung der Biobasiertheit kann zum Beispiel durch die ¹⁴C-Methode erfolgen. Somit kann eine nachhaltige Lösung geschaffen werden, so dass ein Ausstoß an CO₂ minimiert und zum anderen Ressourcen insbesondere durch die Verwendung von Abfallprodukten geschont werden. Biobasierte Produkte sind aus Rohstoffen gefertigt, die im Laufe ihres Wachstums so viel CO₂ verarbeitet haben, wie sie bei der Entsorgung und/oder Verbrennung emittieren. Insbesondere kann auf den Einsatz von fossilen Rohstoffen verzichtet werden. Über die ¹⁴C-Methode kann eine Bestimmung des Alters eines organischen Rohstoffes und somit eine Einteilung in fossil oder biobasiert erfolgen. ¹²C und Radiokohlenstoff (¹⁴C) sind Kohlenstoffisotope. Das sind Kohlenstoffatome mit unterschiedlichen Atommassen. Das Verhältnis zwischen ¹²C und ¹⁴C ist im lebenden Organismus gleich dem Verhältnis in der Atmosphäre. Lebende Biomasse nimmt beim Stoffwechsel durch Nahrung oder durch Photosynthese ¹²C- und ¹⁴C-Isotope auf. Kommt der Stoffwechsel eines Organismus zum Stillstand, wird kein weiterer Radiokohlenstoff aufgenommen. Das Isotopenverhältnis zu ¹²C nimmt mit der Zeit ab, weil das ¹⁴C-Isotop mit einer Halbwertszeit von 5730 Jahren zerfällt. ¹²C dagegen ist ein stabiles Kohlenstoffisotop und zerfällt nicht.

Gemäß einer Ausgestaltung kann es vorgesehen sein, dass der Düngemittelträgerstoff bei Kontakt mit Wasser zu einer zeitverzögerten und/oder stufenweisen Abgabe der gespeicherten Nährstoffe führt. Somit ist es möglich, dass mittels des Düngemittelträgerstoffs eine gezielte Abgabe von Nährstoffen über einen Zeitraum von wenigstens fünf Tagen, insbesondere von wenigstens einer Woche, insbesondere von wenigstens zwei Wochen, insbesondere von wenigstens drei Wochen, insbesondere von wenigstens vier Wochen, insbesondere von wenigstens sechs Wochen, insbesondere von wenigstens zwei Monaten, insbesondere von wenigstens drei Monaten, insbesondere von wenigstens vier Monaten, insbesondere von wenigstens einem halben Jahr, umsetzbar ist. Dies hat den Vorteil, dass eine kontinuierliche Nährstoffversorgung von zu düngenden Pflanzen über einen bestimmten Zeitraum erreicht werden kann, ohne dass es zu einer Auswaschung der Nährstoffe aus dem gedüngten Boden kommt oder die Auswaschung im Vergleich zu vorbekannten Düngern zumindest reduzierbar ist.

Beispielsweise kann sich eine zeitverzögerte und/oder stufenweise Abgabe der gespeicherten Nährstoffe darauf beziehen, dass bei Kontakt des Düngemittelträgerstoffs mit Wasser eine Initialabgabe von gespeicherten Nährstoffen höchstens 66%, insbesondere höchstens 40 %, insbesondere höchstens 30 %, insbesondere höchstens 25 %, insbesondere höchstens 20 %, insbesondere höchstens 15 %, insbesondere höchstens 10 %, insbesondere höchstens 5 %, insbesondere höchstens 2,5 %, insbesondere höchstens ein Prozent, eines Gesamtanteils an gespeicherten Nährstoffen ausmacht. Die Initialabgabe kann sich dabei auf die Abgabe innerhalb von 24 Stunden, insbesondere innerhalb von zwölf Stunden, insbesondere innerhalb von sechs Stunden, insbesondere innerhalb von drei Stunden, insbesondere innerhalb von einer Stunde, nach Kontakt des Düngemittelträgerstoffs mit Wasser beziehen. Somit kann verhindert werden, dass durch eine Initialabgabe bereits ein Großteil der Nährstoffe durch den Düngemittelträgerstoff abgegeben und unkontrolliert ausgewaschen wird. Wie bereits zuvor in der Einleitung erläutert, besteht ein heutiges Problem darin, dass auf den Boden direkt aufgebrachte Dünger oder Pflanzennährstofflösungen mit pflanzenverfügbaren Nährstoffen durch den Boden unzureichend gespeichert werden, so dass es zu einer Auswaschung der Nährstoffe aus den Bodenschichten kommt. Dies kann im schlimmsten Falle dazu führen, dass ein Nährstoffgehalt in Gewässern und/oder im Grundwasser zu hoch ist. In Gewässern kann dies beispielsweise zu einer schädlichen Eutrophierung führen.

Gemäß einer weiteren Ausgestaltung kann das wenigstens eine Pflanzenblattpolymer wenigstens eines oder eine Kombination aus mehreren ausgewählt aus der Gruppe aus pflanzlicher Cellulose, pflanzlicher Hemicellulose und/oder pflanzlichem Lignin sein. Pflanzenblattpolymere, wie pflanzliche Cellulose, pflanzliche Hemicellulose und/oder pflanzliches Lignin als nachwachsende Rohstoffe eignen sich besonders gut zur Bindung von für Pflanzen essentiellen Nährstoffionen, die zum Beispiel an Polymerketten gebunden werden können. Cellulose weist aufgrund der in Glucosegrundeinheiten vorhandenen Hydroxylgruppen eine hydrophile Oberfläche mit einer guten Adsorptionskapazität auf. Die Hydroxylgruppen und Carboxylgruppen haben ionenaustauschende Eigenschaften. Der molekulare Aufbau der Cellulosefibrillen lässt anorganische und/oder organische Verbindungen binden, ohne dass diese Verbindungen chemisch mit den Glucoseresten in Verbindung stehen. Die lose Cellulosestruktur, die durch Wasserstoffbrücken vernetzt ist, ermöglicht eine hohe Sorptionskinetik. Auch Lignin als wichtiger Bestandteil des Pflanzenblattgerüstes bietet aufgrund seiner Struktur ein Potential zur Adsorption, das jenes reiner Cellulose übersteigen kann. Lignin als komplexes Makromolekül beinhaltet u.a. Alkohol-, Aldehyd-, Keton- und Etherbausteine. Die enthaltenen Carboxylgruppen haben ionenaustauschende Eigenschaften.

Beispielsweise kann es dabei vorgesehen sein, dass in Trockenmasse ein Massenanteil der pflanzlichen Cellulose an der Gesamtmasse der Pflanzenblattpolymere von 15 Masse-% bis 50 Masse-% und/oder ein Massenanteil der Hemicellulose an der Gesamtmasse der Pflanzenblattpolymere von 3 Masse-% bis 50 Masse-% und/oder ein Massenanteil des Lignins an der Gesamtmasse der Pflanzenblattpolymere von 7 Masse-% bis 20 Masse-% beträgt. Verfahren zur Bestimmung des Massenanteils von Lignin, Hemicellulose und/oder Cellulose sind dem Fachmann bekannt (siehe hierzu zum Beispiel: "A simplified method for lignin measurement in a range of forage species A.V.Chaves, G.C. Waghorn and M.H.Tavendale Proceedings of the New Zealand Grassland Association 64; Page 129-133; 2002"). Ein verwendbares Verfahren zur Bestimmung des Anteils von Cellulose, Hemicellulose und/oder Lignin in Pflanzenblattpolymeren basiert auf dem zuvor genannten Verfahren zur Ligninbestimmung in Futtermitteln und Weidegras unterschiedlichsten Reifegrades und wendet dieses auf Pflanzenblattpolymere an. Das Kochen von Pflanzenblattpolymeren in neutralen Lösungen hinterlässt Cellulose, Hemicellulose und Lignin in Form von Zellwandresten und Fasern. Dies wird als NDF (neutral detergent fibre) bezeichnet. Das Einbringen von NDF in Säure scheidet Hemicellulose ab und hinterlässt die ADF (acid detergent fibre). ADF zusammen mit 12 molarer Schwefelsäure hinterlässt Lignin und Asche (Siehe Mertens, D.R. 1992. Crtical conditions in determining detergent fibers. Pp.c1-c8. In: Proceedings of National Forage Testing Association (NFTA) Forage Analysis Workshop, September 16-17, Denver (CO), USA). Das modifizierte Bestimmungsverfahren ist in den Ausführungsbeispielen detailliert beschrieben.

Als besonders gut geeignet haben sich Pflanzenblattpolymere herausgestellt, die von Blättern von Pflanzen aus der Familie der Angiospermen stammen (Pflanzenblattpolymer-Quelle). Als besonders gut geeignet haben sich dabei Pflanzenblattpolymere herausgestellt, die von Blättern von Pflanzen aus der Familie der zweikeimblättrigen Angiospermen stammen. Dazu zählen zum Beispiel die wichtigsten Laubbäume, wie Hasel, Birke, Buche, Eiche, Kastanie, Pappel und/oder Weide. Es enthält neben den Carotinoiden (gelber, oranger Farbstoff), Anthocyane (blau bis violett) als wasserlöslichen Farbstoff. Anthocyane weisen in Position 2 immer einen p-Hydroxylphenyl-Substituenten (B-Ring) sowie in Position 3 eine Hydroxygruppe auf. Diese Form verleiht den Molekülen eine erhöhte Wasserlöslichkeit, Substituierbarkeit und Bindungsmöglichkeiten. Auch gewichtsmäßig spielen Anthocyane im alternden Pflanzenblattpolymer eine wichtige Rolle, wenn davon ausgegangen wird, dass ca. 2% des Kohlenstoffes, der durch Photosynthese in Pflanzen gebildet wird, zu Anthocyanen und verwandten Kohlenstoffverbindungen umgesetzt wird.

Als besonders nachhaltig erwiesen hat sich eine Ausgestaltung, bei welcher vorgesehen ist, dass der Düngemittelträgerstoff zerkleinertes Pflanzenmaterial beinhaltet, in welchem zumindest ein Teil des wenigstens einen Pflanzenblattpolymers enthalten ist. Das zerkleinerte Pflanzenmaterial kann dabei auch reines Pflanzenblattpolymer sein. Dabei hat es sich als besonders vorteilhaft herausgestellt, Pflanzenblattmaterial von Herbstblättern, insbesondere als Pflanzenblattpolymer-Quelle, zu verwenden. Besonders zweckmäßig kann es dabei sein, wenn die Herbstblätter einen Rotanteil von wenigstens 10 % und/oder einen Grünanteil von weniger als 10 % aufweisen. Besonders bevorzugt können die Herbstblätter einen Rotanteil von mindestens 15 %, insbesondere von mindestens 20 %, insbesondere von mindestens 25 %, insbesondere von mindestens 30 %, insbesondere von mindestens 40 %, insbesondere von mindestens 50 %, insbesondere von mindestens 60 %, insbesondere von mindestens 70 %, insbesondere von mindestens 80 %, insbesondere von mindestens 90 %, insbesondere von mindestens 95 % oder nahezu 100 %, aufweisen. Das im Herbstblatt nach und nach abgebaute Chlorophyll wandelt sich in Abbauprodukte (non-fluorescent chlorophyll catabolites; NCC) um, die noch im abgestorbene PBP vorliegen oder in die Verholzungen des Baumes zurückgezogen wurden. Die im Blatt verbliebenen NCC sind amphiphile Verbindungen mit einer Vielzahl von polaren Funktionalitäten an der Peripherie ihrer Tetrapyrrolkerne. Der im Blatt vollzogene Alterungs- und Rückbauprozess wandelt das Chlorophyll des Blattes durch die Herauslösung des koordinierenden Zentralions Mg, der Öffnung des Tetrapyrrollkernringes um und schafft mit seiner Weitung und Streckung ein erweitertes Potential an Bindemöglichkeiten. Die Bindemöglichkeit ist als gut anzusehen. Umso höher daher der Rotanteil an einem als Pflanzenblattpolymer-Quelle verwendeten Pflanzenblatt ist, desto höher ist daher in der Regel auch dessen Adsorptionsfähigkeit. Der gewichtsmäßige Anteil des Chlorophylls am PBP ist zwischen 0,6% und 1,2% der Trockensubstanz anzugeben. Das kann auch für seine Abbauprodukte angenommen werden und als wirkungsvolles Bindungspotential mit einem geringen Gewichtsanteil am PBP anzusehen sein.

Gemäß einer weiteren Ausgestaltung kann ein Massenanteil an Lignin mehr als 1 Masse-% in Trockenmasse betragen, insbesondere mehr als 1,5 %, insbesondere mehr als 2 %, insbesondere mehr als 3 %. Alternativ oder ergänzend kann ein Massenanteil an einem Chlorophyllabbauprodukt non-fluorescent chlorophyll catabolites (NCC) von 0,6 Masse-% bis 1,2 Masse-% in Trockensubstanz betragen, insbesondere mindestens 0,6 Masse-%, insbesondere mindestens 0,8 Masse-%, insbesondere mindestens 1,0 Masse-%. Weiter alternativ oder ergänzend kann ein Anteil an Anthocyanen am Gesamtanteil von im Pflanzenblattmaterial enthaltenen Pflanzenfarbstoffen mindestens 10%, insbesondere mindestens 20%, insbesondere mindestens 30%, insbesondere mindestens 40%, insbesondere mindestens 50%, insbesondere mindestens 60%, insbesondere mindestens 70%, insbesondere mindestens 80%, insbesondere mindestens 90%, insbesondere 100%, insbesondere von 10 % bis 100 % betragen.

Um einen Düngemittelträgerstoff mit einer möglichst hohen Aufnahmefähigkeit und Speicherfähigkeit auszubilden, kann der Düngemittelträgerstoff einen Massenanteil des wenigstens einen Pflanzenblattpolymers und/oder des Blattmaterials von 70 Masse-% bis 99 Masse-% aufweisen. Vorzugsweise kann der Massenanteil des wenigstens einen Pflanzenblattpolymers und/oder des Blattmaterials am Düngemittelträgerstoff mindestens 70 %, insbesondere mindestens 75 %, insbesondere mindestens 80 %, insbesondere mindestens 85 %, insbesondere mindestens 90 %, insbesondere mindestens 95 %, insbesondere etwa 99% betragen. Alternativ oder ergänzend kann der Düngemittelträgerstoff einen Massenanteil der Bakteriencellulose von 1 Masse-% bis 15 Masse-% aufweisen. Weiter bevorzugt kann der Massenanteil der Bakteriencellulose am Düngemittelträgerstoff mindestens 1 %, insbesondere mindestens 2 %, insbesondere mindestens 5 %, insbesondere mindestens 7 %, insbesondere mindestens 10 %, insbesondere mindestens 12 %, insbesondere mindestens 15 % betragen. Alternativ oder ergänzend kann der Düngemittelträgerstoff einen Massenanteil von Wasser und/oder einem weiteren Bestandteil von 0 Masse-% bis 15 Masse-% aufweisen. Besonders bevorzugt kann der Düngemittelträgerstoff einen Massenanteil von Wasser und/oder einem weiteren Bestandteil von mindestens 1 %, insbesondere mindestens 2 %, insbesondere mindestens 5 %, insbesondere mindestens 7 %, insbesondere mindestens 10 %, insbesondere mindestens 12 %, insbesondere mindestens 15%, aufweisen. Die einzelnen Komponenten des Düngemittelträgerstoffs addieren sich jeweils zu 100 Masse-%. Besonders bevorzugt enthält der Düngemittelträgerstoff neben Pflanzenblattpolymer und/oder Pflanzenblattmaterial, Bakteriencellulose und Wasser keine zusätzlichen Bestandteile und ist daher besonders einfach aufgebaut, weist jedoch dennoch gute Speicher- und Abgabeeigenschaften auf, die zur Herstellung eines nachhaltigen und wirkungsvollen Düngemittels erforderlich sind. Der Düngemittelträgerstoff kann daher gemäß einer bevorzugten Ausgestaltung aus Pflanzenblattpolymer und/oder Pflanzenblattmaterial, Bakteriencellulose und Wasser bestehen.

Gemäß einer weiteren Ausgestaltung kann es vorgesehen sein, dass die Bakteriencellulose eine Kristallinität Xc von 75% bis 95% aufweist. Vorzugsweise kann die Kristallinität Xc mindestens 75%, insbesondere mindestens 80%, insbesondere mindestens 85%, insbesondere mindestens 90% oder mehr betragen. Gemäß einer besonders vorteilhaften Ausgestaltung kann die Bakteriencellulose eine Kristallinität Xc von 80% bis 90% aufweisen.

Gemäß einer weiteren, vorteilhaften Ausgestaltung kann es vorgesehen sein, dass ein Polymerstrang der Bakteriencellulose eine molare Masse von wenigstens 50 × 10⁴ g/mol, insbesondere von wenigstens 100 × 10⁴ g/mol, insbesondere von wenigstens 150 × 10⁴ g/mol, insbesondere von wenigstens 192 × 10⁴ g/mol, hat.

Alternativ oder ergänzend kann es gemäß einer weiteren Ausgestaltung vorgesehen sein, dass die Bakteriencellulose einen Polymerisationsgrad von wenigstens 1000, insbesondere von wenigstens 2500, insbesondere von wenigstens 5000, insbesondere von wenigstens 7500, insbesondere von wenigstens 10000, aufweist.

Gemäß einer weiteren Ausgestaltung kann es vorgesehen sein, dass 99 Massen-% eines Feuchtgewichtes der Bakteriencellulose Wasser und 1 Masse-% Cellulosefasern ausmachen, insbesondere wobei sich diese Angabe auf den Zustand vor einem Trocknungsschritt beziehen kann. Somit ist eine besonders große Oberfläche zur Adsorption eingerichtet.

Die oben genannte/n Aufgabe/n werden zudem wie folgt gelöst.

Die Erfindung betrifft weiter ein Verfahren zur Herstellung eines Düngemittels, insbesondere mit einem Düngemittelträgerstoff, wie er hierin beschrieben und beansprucht ist, umfassend die Schritte:
- Bereitstellen von Pflanzenblättern, insbesondere von Herbstblättern,
- Trocknung der Pflanzenblätter bis ein Massenanteil an Wasser der Pflanzenblätter von maximal 25 Masse-%, insbesondere maximal 20 Masse-%, insbesondere maximal 15 Masse-%, insbesondere maximal 10 Masse-%, insbesondere maximal 5 Masse-%, erreicht ist,
- Zerkleinern der Pflanzenblätter zu einem Pflanzenblattmaterial mit Partikelgrößen, insbesondere durchschnittlichen Partikelgrößen, von 0,1 mm bis 2 mm, insbesondere von 0,2 bis 1 mm
   - Einlegen des zerkleinerten Pflanzenblattmaterials in eine Pflanzennährstofflösung, beispielsweise in eine organische Pflanzennährstofflösung mit pflanzenverfügbarem Stickstoff, bis die Pflanzennährstofflösung durch das Pflanzenblattmaterial aufgenommen wurde, vorzugsweise über einen Zeitraum von mehreren Tagen, zur Herstellung eines Pflanzenblatt-Nährstoffmaterials,
   - Trocknung des Pflanzenblatt-Nährstoffmaterials, beispielsweise bis zu einem Wassergehalt von maximal 15 Masse-%, insbesondere von maximal 10 Masse-%, insbesondere von maximal 5 Masse-%, insbesondere von weniger als 1 Masse-% oder 0 Masse-%.

Es erfindungsgemäße Verfahren stellt eine besonders ökologische und nachhaltige Möglichkeit dar, um ein Düngemittel aus nachwachsenden Rohstoffen herzustellen. Dabei kann eine Pflanzennährstofflösung verwendet werden, die ausschließlich aus organischen Abfällen stammende, mineralische Nährstoffe aufweist. Die rein biobasierte Grundlage kann, wie zuvor bereits beschrieben wurde, durch die ¹⁴C-Methode geprüft werden.

Gemäß einer weiteren, unabhängigen Lösung, die optional in Kombination mit den Merkmalen des zuvor beschriebenen Verfahrens kombinierbar ist, betrifft die Erfindung außerdem ein Verfahren zur Herstellung eines Düngemittels, beispielsweise mit einem Düngemittelträgerstoff, wie er hierin beschrieben und beansprucht ist, umfassend die Schritte:
- Bereitstellen von Bakteriencellulose, insbesondere hergestellt durch Essigsäurebakterien, beispielsweise durch Gluconacetobacter xylinum,
- Zerkleinern der Bakteriencellulose in Partikel mit einer Größe, insbesondere einer durchschnittlichen Größe, von 0,1 mm bis 3 mm, insbesondere von 0,5 mm bis 2,5 mm, insbesondere von 1 mm bis 2 mm,
- Trocknung der Bakteriencellulose, insbesondere durch einen Filterschritt, so dass der Massenanteil von Wasser an den Partikeln auf maximal 60 Massen-%, insbesondere maximal 50 Massen-%, insbesondere maximal 40 Massen-%, insbesondere maximal 30 Massen-%, gesenkt wird,
- Einlegen der Bakteriencellulose-Partikel in eine Pflanzennährstofflösung, insbesondere eine organische Pflanzennährstofflösung mit pflanzenverfügbarem Stickstoff, bis die Pflanzennährstofflösung durch die Bakteriencellulose-Partikel aufgenommen wurde, vorzugsweise über einen Zeitraum von mehreren Tagen, zur Herstellung von Bakteriencellulose-Nährstoff-Partikeln,
   - Trocknung der Bakteriencellulose-Nährstoff-Partikel, insbesondere derart, dass die Bakteriencellulose-Nährstoff-Partikel einen Wasseranteil von maximal 10 Masse-%, insbesondere von maximal 5 Masse-%, insbesondere von weniger als 1 Masse-% oder 0 Masse-%, aufweisen.

Die Verwendung von Bakteriencellulose weist den Vorteil auf, dass diese eine besonders große Oberfläche aufweist, die als Adsorptionsfläche dient. Somit kann dadurch ein Düngemittel hergestellt werden, bei welchem eine besonders hohe Speicherkapazität pro Volumen vorhanden ist. Des Weiteren kann die Druckfestigkeit des Düngemittels maßgeblich durch die BC verbessert werden. Des Weiteren kann die Druckfestig durch die Bakteriencellulose insbesondere aufgrund der kristallinen Struktur verbessert werden.

Nachfolgend werden vorteilhafte Ausgestaltungen der Erfindung beschrieben, die allein oder in Kombination mit den Merkmalen anderer Ausgestaltungen optional zusammen mit den Merkmalen der unabhängigen Verfahrensansprüche kombiniert werden können.

Gemäß einer Ausgestaltung kann das Pflanzenblatt-Nährstoffmaterial und die Bakteriencellulose-Nährstoff-Partikel zur Herstellung des Düngemittels miteinander vermischt werden. Unterschiedliche Anteile an Bakteriencellulose und Pflanzenblattpolymer führen zu unterschiedlichen Eigenschaften des Düngemittels. Gemäß einer besonders vorteilhaften Ausgestaltung kann ein Massenanteil des Pflanzenblatt-Nährstoffmaterials von 70 Masse-% bis 99 Masse-% und/oder ein Massenanteil der Bakteriencellulose-Nährstoff-Partikel von 1 Masse-% bis 15 Masse-% und/oder ein Massenanteil von Wasser, beispielsweise nach Durchführung eines Trocknungsschrittes, und/oder einem weiteren Bestandteil von 0 Masse-% bis 15 Masse-% betragen. Vorzugsweise kann der Massenanteil des Pflanzenblatt-Nährstoffmaterials am Düngemittel mindestens 70 %, insbesondere mindestens 75 %, insbesondere mindestens 80 %, insbesondere mindestens 85 %, insbesondere mindestens 90 %, insbesondere mindestens 95 %, insbesondere etwa 99% betragen. Weiter bevorzugt kann der Massenanteil der Bakteriencellulose-Nährstoff-Partikel am Düngemittel mindestens 1 %, insbesondere mindestens 2 %, insbesondere mindestens 5 %, insbesondere mindestens 7 %, insbesondere mindestens 10 %, insbesondere mindestens 12 %, insbesondere mindestens 15 % betragen. Besonders bevorzugt kann das Düngemittel einen Massenanteil von Wasser und/oder einem weiteren Bestandteil von mindestens 1 %, insbesondere mindestens 2 %, insbesondere mindestens 5 %, insbesondere mindestens 7 %, insbesondere mindestens 10 %, insbesondere mindestens 12 %, insbesondere mindestens 15%, aufweisen. Die genannten Massenanteile können sich auf die Zusammensetzung des Düngemittels nach einem Trocknungsschritt beziehen, also insbesondere auf das fertig hergestellte, insbesondere streufähige Düngemittel.

Die Mischung des Pflanzenblattpolymers und der Bakteriencellulose kann auch vor Zugabe der Pflanzennährstofflösung erfolgen. Die diesbezüglich erforderlichen Mengen sind beispielsweise zuvor in Bezug auf die Zusammensetzung und Herstellung des Düngemittelträgerstoffes beschrieben. Nach dem Vermischen der beiden Komponenten kann das Einlegen dieser in die Nährstofflösung in gleicher Art und Weise erfolgen.

Um eine möglichst gute Vermischung erreichen zu können, kann das Pflanzenblatt-Nährstoffmaterial und die Bakteriencellulose-Nährstoff-Partikel, bei Bedarf zusammen mit zusätzlich hinzugegebenem Wasser, zu einem Breigemisch vermischt werden. Nach Vermischung insbesondere mit Wasser kann ein Massenanteil des Wassers an dem Breigemisch wenigstens 60 Masse-%, insbesondere wenigstens 70 Masse-%, insbesondere wenigstens 80 Masse-%, betragen.

Um dem Dünger zur Ausbringung mittels einer Düngerstreuvorrichtung, wie einer Zentrifugalstreuvorrichtung, eine geeignete Form zu verleihen, kann die Mischung aus Pflanzenblatt-Nährstoffmaterial und Bakteriencellulose-Nährstoff-Partikeln, insbesondere nach Wasserzugabe, in eine gewünschte Form gepresst werden. Besonders zweckmäßig kann es dabei sein, wenn die Mischung in Pellets und/oder Kugeln und/oder kugelige Form gepresst wird.

Alternativ oder ergänzend kann das Breigemisch, insbesondere nach einer Ausformung, getrocknet werden.

Die Erfindung betrifft außerdem ein Düngemittel, welches vorzugsweise vollständig biologisch abbaubar ist. Das Düngemittel umfasst einen Düngemittelträgerstoff, wie er hierin beschrieben und beansprucht ist. Alternativ oder ergänzend kann das Düngemittel mittels des Verfahrens, wie es hierin beschrieben und beansprucht ist, hergestellt worden sein. Das Düngemittel weist als wenigstens einen gespeicherten Nährstoff pflanzenverfügbaren, mineralisierten Stickstoff auf. Das Düngemittel weist somit gegenüber vorbekannten Düngemitteln den Vorteil auf, dass eine unkontrollierte Abgabe von pflanzenverfügbarem Stickstoff verhindert wird. Vielmehr kann eine von Abbauprozessen gesteuerte, stufenweise Abgabe erfolgen.

Gemäß einer vorteilhaften Weiterbildung können die Bestandteile des Düngemittels zu 100% biobasiert sein. Wie zuvor bereits ausführlich erläutert wurde, kann eine Bestimmung der Biobasiertheit durch die ¹⁴C-Methode erfolgen.

Um das Düngemittel mittels einer Düngerstreuvorrichtung, wie einer Zentrifugalstreuvorrichtung auf einen Ackerboden ausbringen zu können, kann das Düngemittel eine streufähige Körnerform aufweisen. Körnerform kann dabei die zuvor genannten Formen, wie Pellets und/oder Kugeln, umfassen.

Dabei hat es sich als besonders vorteilhaft gezeigt, wenn ein Durchmesser, insbesondere ein mittlerer Wert eines Durchmessers, der einzelnen Körner wenigstens 1,5 mm, insbesondere wenigstens 2 mm, insbesondere von 2 mm bis 4 mm, beträgt.

Alternativ oder ergänzend kann ein Volumen der Körner, insbesondere ein durchschnittliches Volumen der Körner, jeweils wenigstens 10 mm³, insbesondere wenigstens 12 mm³, insbesondere maximal 18 mm³, insbesondere maximal 15 mm³, insbesondere von 12 mm³ bis 15 mm³, betragen.

Um ein Zerfallen der Körner insbesondere bei der Ausbringung mittels einer Düngerstreuvorrichtung, wie einer Zentrifugalstreuvorrichtung, und/oder während der Lagerung besser vermeiden zu können, kann es vorteilhaft sein, wenn eine Dichte der Körner jeweils wenigstens 0,01 g/mm³ und/oder maximal 0,03 g/mm³ beträgt.

Gemäß einer weiten Ausgestaltung kann es vorgesehen sein, dass die Körner eine abgerundete Form, insbesondere eine Kugelform, aufweisen. Somit ist es möglich, die Körner möglichst weit zu versteuern, so dass die Düngung eines Feldes einfacher ist.

Um einen Transport bzw. ein Nachfließen des Düngemittels, beispielsweise innerhalb einer Düngerstreuvorrichtung , wie einer Zentrifugalstreuvorrichtung, zu gewährleisten, während das Düngemittel ausgebracht wird, kann es vorgesehen sein, dass die Körner eine Fließfähigkeit von wenigstens 2,5 kg pro Minute, insbesondere von wenigstens 3 kg pro Minute, insbesondere zwischen 3 kg pro Minute bis 8 kg pro Minute, aufweisen. Beispielsweise kann die Fließfähigkeit mittels eines standardisierten Trichters nach EN 13299 bestimmt werden. Die Fließfähigkeit kann beispielsweise durch eine abgerundete Form verbessert werden, wie es bereits zuvor beschrieben ist.

Um ein Zerfallen des Düngemittels während einer Lagerung und/oder bei einer Ausbringung beispielsweise mittels einer Düngerstreuvorrichtung, wie einer Zentrifugalstreuvorrichtung, zu verhindern, kann es vorgesehen sein, dass die Körner jeweils eine Druckfestigkeit von mindestens 15 N aufweisen. Besonders vorteilhaft kann es sein, wenn die Körner jeweils eine Druckfestigkeit von mindestens 20 N, insbesondere von mindestens 25 N, insbesondere von mehr als 25 N, aufweisen.

Um eine Staubbelastung eines Benutzers zu reduzieren, kann es gemäß einer weiteren Ausgestaltung vorgesehen sein, dass das Düngemittel Staub in einen Massenanteil von maximal 1 Masse-%, insbesondere von maximal 0,5 Masse-%, insbesondere von maximal 0,2 Masse-%, insbesondere weniger als 0,2 Masse-%, aufweist.

Die Erfindung betrifft zudem eine Verwendung eines Düngemittelträgerstoffs, wie er hierin beschrieben und beansprucht ist, zur Speicherung und zur Abgabe von Wasser und/oder von pflanzenverfügbaren Nährstoffen. Der Begriff "Speicherung" kann sich beispielsweise auf eine Adsorption beziehen. Beispielsweise kann dies durch eine Verwendung des Verfahrens, wie es hierin beschrieben beansprucht ist, erfolgen. Bei den pflanzenverfügbaren Nährstoffen kann es sich wenigstens um pflanzenverfügbaren, mineralisierten Stickstoff und/oder Kalium und/oder Phosphat handeln.

Die Erfindung betrifft schließlich eine Verwendung eines Düngemittels, wie es hierin beschrieben und beansprucht ist, zur Düngung eines Anbaubodens durch Verstreuen des Düngemittels. Um größere Anbauflächen möglichst schnell mittels des Düngemittels düngen zu können, kann es vorteilhaft sein, wenn es mit einer Düngerstreuvorrichtung, wie zum Beispiel einer Zentrifugalstreuvorrichtung, ausgebracht wird. Besonders die Möglichkeit der Verteilung des Düngemittels mittels einer Düngerstreuvorrichtung, wie zum Beispiel einer Zentrifugalstreuvorrichtung stellt einen wichtigen wirtschaftlichen Aspekt des Düngemittels dar, da nur dann eine Ausbringung des Düngemittels auf großflächigen Anbauflächen innerhalb einer vertretbaren Zeit möglich ist. Zudem stellt die Lager- und Transportfähigkeit in diesem Zusammenhang eine wichtige Rolle dar. Die streufähige Form des Düngemittels muss schließlich auch einen längeren Transport bzw. eine längere Lagerung überdauern und darf dabei insbesondere nicht in kleine Fragmente, wie Staub, zerfallen. Diese Eigenschaften können durch die hierin beschriebene und/oder beanspruchte Zusammensetzung und das Verpressen zu Körner mit der genannten Druckfestigkeit erreicht werden.

Pflanzenblattpolymer insbesondere aus Herbstblättern schafft eine hohe Beladungskapazität mit Nährstoffionen sowie Masse und Dichte des Korns. Bakteriencellulose weist ein enges Netzwerk von Mikrofibrillen auf, die neben der Einbindungsfähigkeit
der Pflanznährstoffionen aufgrund einer überwiegend vorhandenen kristallinen Struktur, für eine sehr hohe Flüssigkeitsaufnahmefähigkeit und für mechanische Festigkeit und Formstabilität des Düngerkorns beim Verschleudern des Düngemittelkorns sorgt. Erst die Kombination schafft hohe Beladungs- und Entladungskapazität, Masse, Dichte und Festigkeit für Schleuderfähigkeit.

Die Erfindung betrifft also insbesondere einen biologisch abbaubaren Düngemittelträgerstoff, ein Verfahren zur Herstellung eines Düngemittels und ein Düngemittel. Der Düngemittelträgerstoff ist dazu eingerichtet, um eine Speicherung und Abgabe von Wasser und pflanzenverfügbaren Nährstoffen vorzunehmen. Er weist einen Anteil an wenigstens einem Pflanzenblattpolymer und einen Anteil an Bakteriencellulose auf.

### Ausführungsbeispiele

**Verfahren zur Herstellung des Düngemittelträgerstoffs und eines Düngerkorns umfassend Pflanzenblattpolymer (PBP) und die im PBP aufgenommenen Nährstoffionen eines Nährstoffkonzentrates umfassend folgende Einzelschritte:**
1. Auswahl von Pflanzenblätter vorteilhafterweise von Laubbäumen, vorteilhafterweise Herbstblätter, vorteilhafter Weise mit einem Rotanteil von mindestens 10% und einem Ligninanteil von mehr als 1% und weniger als 10% und einem Grünanteil von weniger als 10% und damit einem entsprechend hohen Anteil NCC's.
2. Nach Abernten des Pflanzenblattes erfolgt die Trocknung. Nach einer Trockenzeit von 24 Stunden sollte die Trockensubstanz einen Feuchtigkeitsanteil von weniger als 5 % vorweisen.
3. PBP wird nach Einzelschritt 2 gemahlen und zu einem Pulver verarbeitet mit einem Durchmesser der Partikel zwischen 0,2 und 1 mm.
4. Gemahlenes Pulver PBP wird in Nährstoffkonzentrat "eingelegt", so dass das Nährstoffkonzentrat vollständig vom PBP Pulver aufgenommen wird. Dieser Vorgang erfolgt mehrtägig.

### Verfahren zur Herstellung und Beladung des PBP

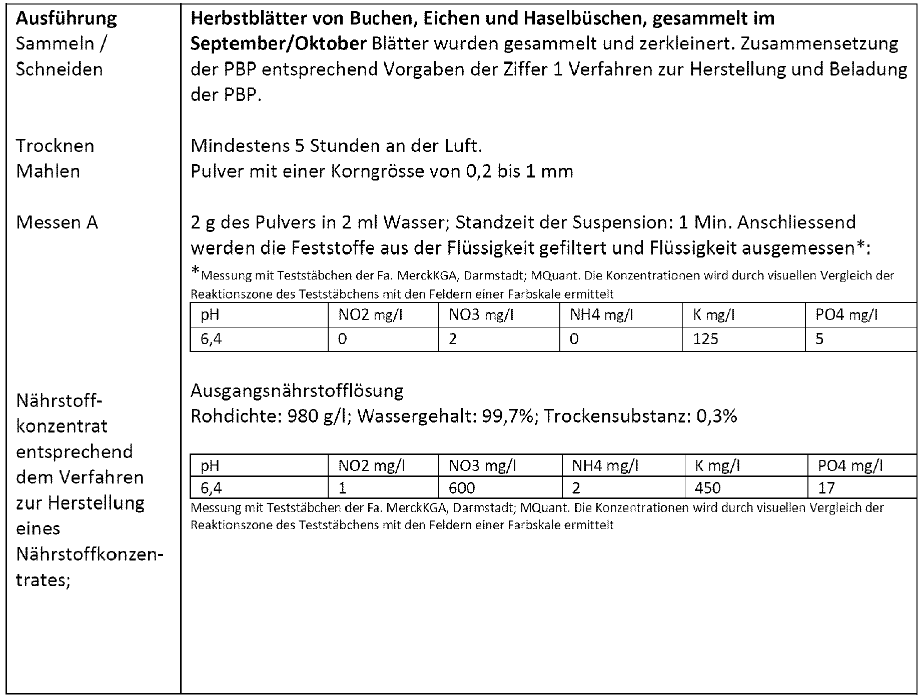

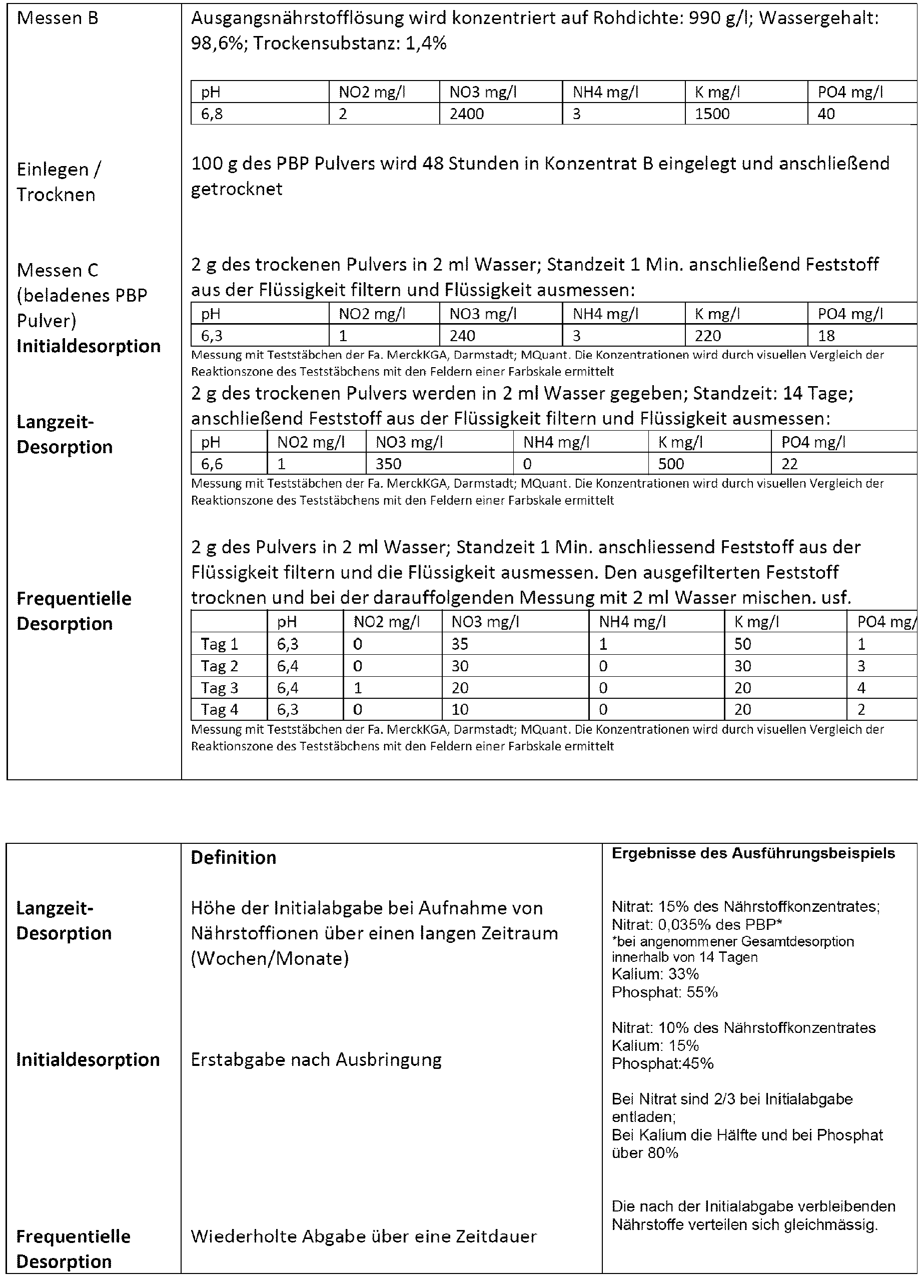

Fazit: Relativ hohe Initialabgabe; gleichmäßige Folgeabgaben.

**Verfahren zur Herstellung des Düngemittelträgerstoffs und eines Düngerkorns umfassend bakterielle Cellulose (BCP) und in der BCP aufgenommenen Nährstoffionen eines Nährstoffkonzentrates umfassend folgende Einzelschritte:**
1. BCP wird durch das Einbringen einer Mischkultur von Essigsäurebakterien (z.B. Gluconacebacter xylinus) in ein Gefäß mit glukosehaltigem Substrat an einer Grenzschicht von Flüssig- und Gasphase mit möglichst homogener Sauerstoffdurchdringung gebildet. Die Kultivierungsmethode ist seit langer Zeit bekannt. Das Celluloseprodukt, das sich auf einer "Kombuchakultur" gebildet wurde von A.J.Brown (A.J.Brown. On an acetic ferment which forms cellulose. J.Chem.Soc., 49,432-439 (1886)) bereits 1886 als Cellulose identifiziert. Kombucha, als Teepilz bekannt, ist eine solche Mischkultur mit Hefe. Dabei wird gesüßter Tee mit einer Kultur angeimpft. Es lassen sich Herstellungsprozesse unterscheiden, bei denen Sauerstoff homogen im Medium verfügbar ist und Prozesse mit einer definierten Flüssig-Gas-Grenzschicht. Die Oberflächenkultivierung ist sehr ineffizient für eine Produktion im großen Maßstab. Durch (teil-)kontinuierliche Produktionsverfahren wird versucht die Ineffizienz zu überwinden.
2. Die gebildete BCP wird in 1 bis 2 mm große Partikel zerkleinert und gefiltert, um den Wassergehalt auf 30 bis 40% zu senken.
3. Die fraktionierte BCP wird getrocknet, um den Gehalt an Substrat und Restwasser weiter zu senken.
4. Getrocknete BCP wird in Nährstoffkonzentrat mehrtägig "eingelegt", so dass das Nährstoffkonzentrat vollständig vom PBP aufgenommen wird. Dieser Vorgang erfolgt mehrtägig.

### Verfahren zur Herstellung und Beladung der BCP

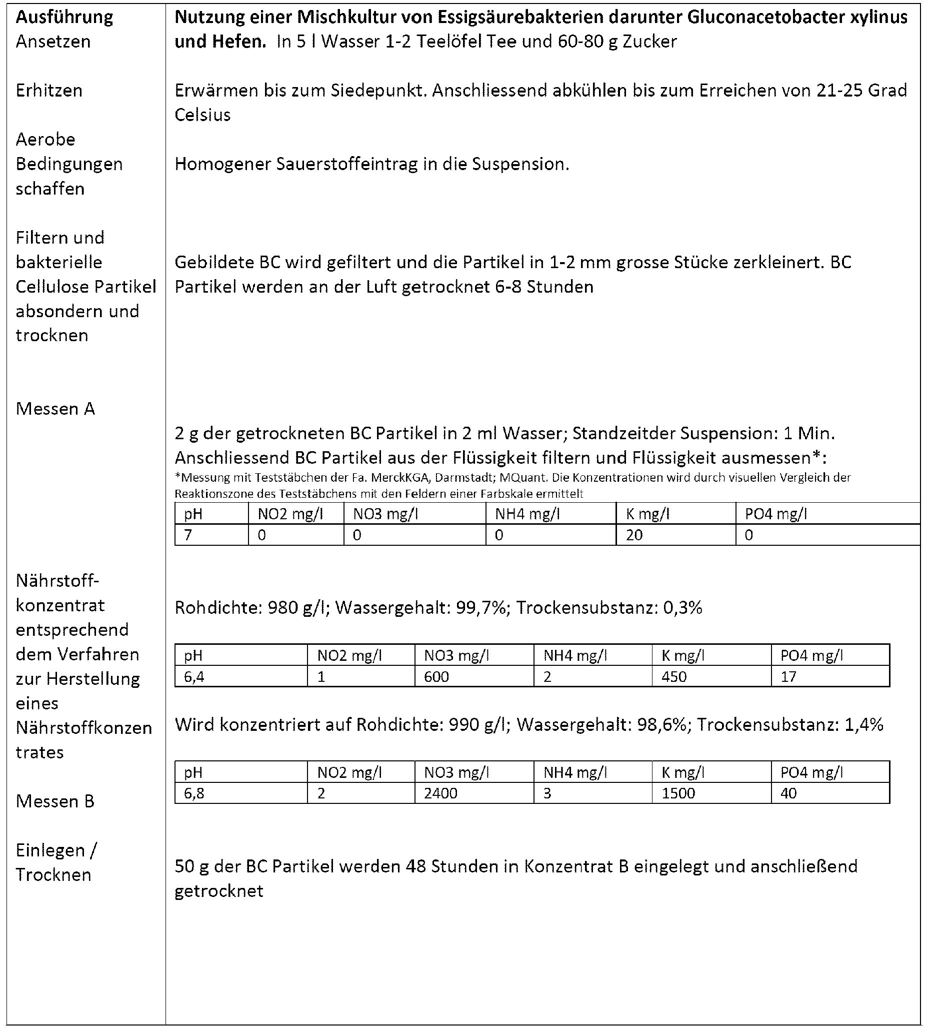

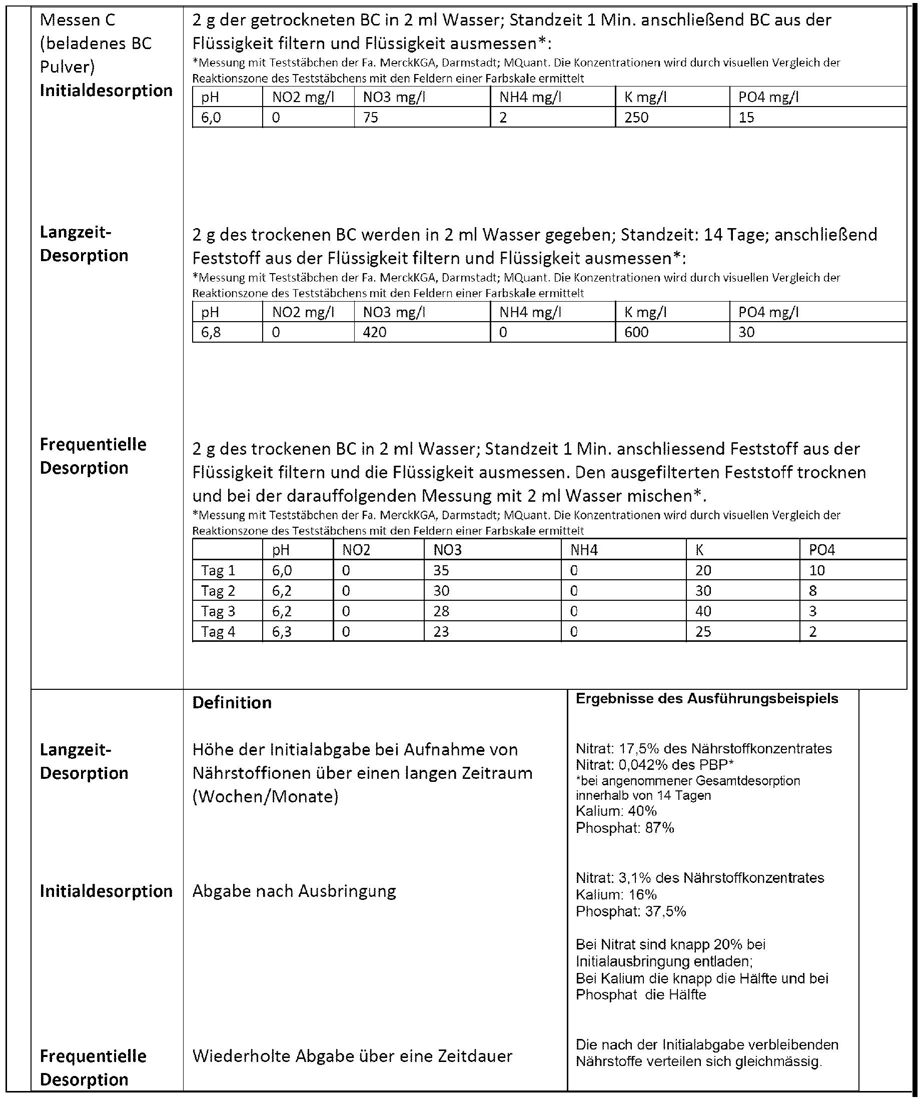

Fazit: Geringe Initialabgabe; gleichmäßige Folgeabgaben.

**Verfahren zur Herstellung eines Düngerkorns PBBCP umfassend einem Hauptträgermaterial PBP und dem Nebenträgermaterial BCP umfassend folgende Einzelschritte:**
1. Vermischen des wie zuvor beschrieben aufbereiteten PBP in Pulverform mit BCP zu unterschiedlichen Anteilen mit dem Ziel der Ausprägung verschiedener Eigenschaften wie Abgabefähigkeit, -frequenz und/oder Zerfall des Düngerkorns.
2. Austrocknung und Formgebung des Düngerkorns zur Optimierung der Streufähigkeit und des Streubildes.

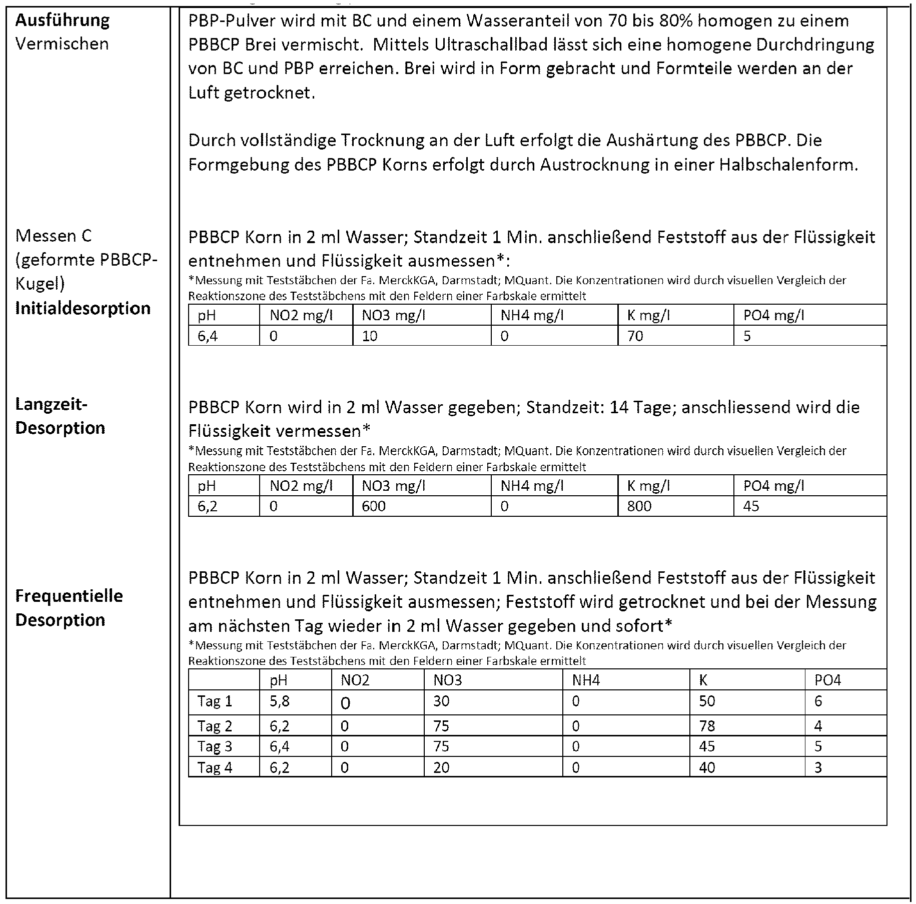

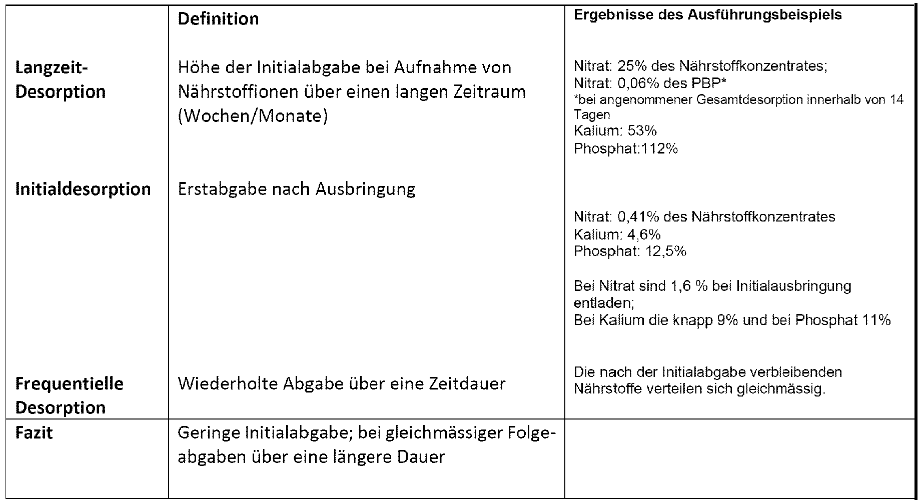

### Verfahren zur Messung des Ligninanteils

Das im Text zuvor bereits genannte modifizierte Verfahren zur Messung eines Ligninanteils erfolgt wie folgt:
A. Verfahren zur Herstellung von ADF für die anschließende ADLignin Analyse:
   1. Trockne 16 ml Glasröhrchen bei 100 °C für mindestens 1 Stunde und wiege diese aus.
   2. Trockne fein gemahlene PBP Proben bei 60 °C und verteile ca. 250 mg auf die ausgewogenen Glasröhrchen (Mahlen erfolgt mit 1 mm Sieb)
   3. 2% CethyTrimethylammoniumbromid in 1 1 0,5 M H₂SO₄ zur Probe hinzufügen und verwirbeln.
   4. Bei stetiger Hitze (Wasserbad) 1 Stunde bei 95-100 °C halten und alle 10 Minuten umrühren.
   5. 10 Minuten zentrifugieren bei 3000 U/m und Überstand absaugen. 3 mal wiederholen
   6. Füge 15 ml heißes dest. Wasser und verwirble. 3 mal 10 Minuten zentrifugieren und Überstand abscheiden.
   7. Füge dem Rückstand 15 ml Aceton hinzu und verwirble. Zentrifugiere 10 Minute bei 300 U/m und scheide den Überstand ab.
   8. Verdampfe das restliche Aceton im Wasserbad bei 60 °C.
   9. Trockne die Glasröhrchen bei 90 °C über Nacht.
   10. Rückstände und Röhrchen wiegen und ADF gemäß Verfahren nach Mertens (*) berechnen.
      (* siehe zudem Mertens, D.R. 1992. Crtical conditions in determining detergent fibers. Pp.c1-c8. In: Proceedings of National Forage Testing Association (NFTA) Forage Analysis Workshop, September 16-17, Denver (CO), USA)
B. Verfahren zur Messung der ADLignin
   11. Glas Mikrofaser Filter und 10 Glasröhrchen kennzeichnen, trocknen und auswiegen
   12. Jeweils 1,5 ml 12 M H₂SO₄ zu den Röhrchen mit dem ADF hinzufügen und bei 30 °C 1 Stunde warmhalten und alle 10 Minuten umrühren
   13. Der säureunlösliche Rückstand wird mittels Filtration durch Trichter und vorgewogenen Glas Mikrofaser Filter gesammelt, mit Wasser und einer Acetonlösung gespült (zweimal) und die Probe wird über Nacht bei 100 °C getrocknet.
   14. Rückstände verbrennen bei 450 °C 6 Stunden lang. Glas Mikrofaser Filter mit der Asche auswiegen.
   15. Der Ligninanteil ergibt sich aus dem Gewichtsunterschied der Rückstände vor und nach der Veraschung.

### Verfahren zur Bestimmung eines Rotanteils oder eines Grünanteils bei einem Herbstblatt

Anthocyane im alternden Blatt bieten hohe Bindungsmöglichkeit für Nährstoffionen. Anthocyane absorbieren das Grün und Gelb (zwischen 500 und 600 nm) des sichtbaren Lichtes. Herbstlaub erscheint rot wegen der Subtraktion von gelb-grünem Licht aus dem Spektrum des reflektierten Lichtes an der Blattoberfläche. Während rotes Licht (620-780 nm Wellenlänge) kaum mit dem Anthocyane-Anteil korreliert. Rotes Licht das mit einem Anthocyan-Anteil verbunden ist, ist verbunden mit dem Fehlen des gelb-grün Lichtes im reflektierten Licht. Eine PBP-Probe weist dann einen besonders gut geeigneten Rotanteil aufgrund von Anthocyanen auf, wenn die Absorptionsspektrumskurve einer VIS-Absorptionsspektroskopie im Wellenlängenbereich zwischen 500 und 600 nm einen Maximalwert aufweist.

Chlorophyll absorbiert fast vollständig die Farben Rot und Blau und lässt grüne Farben an der Blattoberfläche reflektieren. Der Grünanteil des PBP ist entsprechend hoch. Eine PBP Probe weist dann einen Grünanteil auf, wenn die Absorptionsspektrumskurve einer VIS-Absorptionsspektroskopie im Wellenlängenbereich zwischen 400 und 500 nm einen Maximalwert sowie zwischen 600 und 700 nm ein Maximum aufweist.

(Neill SO, Gould KS. Optical properties of leaves in realtion to anthocyanin concentration and distribution. Can J Bot. 1999; 77(12): 1777-1782).

### Verfahren zur Bestimmung eines Masseanteils des Chlorophyll-Abbauprodukts, non-flourescent chlorophyll catabolites (NCC)

NCCs können in Suspensionen bzw. Extrakten von absterbenden Pflanzenblättern aufgrund charakteristischer VIS-Spektroskopie-Absorptionseigenschaften identifiziert werden. Die a-Formylpyrrol-Einheit am Ring B ergeben Absorptionsmaxima bei 320 nm. Zur Ermittlung der Massenkonzentration (mg/l) von NCC in einer Probe Herbstblätter lässt man die Herbstblattlösung (Lösungsmittel: Acetonnitril) photometrische Untersuchungen durchlaufen. Die Wellenlänge des Absorbtionsmaximum der NCC 320 nm wird fest eingestellt. Eine Verdünnungsreihe der Probe wird vermessen und ergibt eine Extinktionskurve (Extinktion zu Massenkonzentration). Aus der Kurve kann nun die Massenkonzentration NCCs einer Probe ermittelt werden.
(siehe dazu auch: S. Moser, Thomas Müller, Michael Oberhuber, and Bernhard Kräutler Chlorophyll Catabolites-Chemical and structural footprints of a fascinating biological phenomenon Eur. J. Org. Chem. 2009, 21-31)

### Verfahren zur Bestimmung eines Anthocyane-Anteils am Gesamtanteil von in dem Pflanzenmaterial enthaltenen Pflanzenfarbstoffen

Anthocyane absorbieren das Grün und Gelb (zwischen 500 und 600 nm) des sichtbaren Lichtes. Zur Ermittlung der Massenkonzentration (mg/l) von Anthocyanen in einer Probe Herbstblätter lässt man die Herbstblattlösung (Lösungsmittel: Acetonnitril) photometrische Untersuchungen VIS-Spektroskopie durchlaufen. Die Wellenlänge des Absorbtionsmaximum der Anthocyane zwischen 500 und 600 nm werden fest eingestellt.

Eine Verdünnungsreihe der Probe wird vermessen und ergibt eine Extinktionskurve (Extinktion zu Massenkonzentration) . Aus der Kurve kann nun die Massenkonzentration von Anthocyanen einer Probe ermittelt werden.

### Verfahren zur Bestimmung des Wassergehalts von Bakteriencellulose und/oder PBP

Der absolute Wassergehalt einer Probe von BC und PBP bestimmt sich wie folgt:
1. Zerkleinern von PBP/BC in Partikel mit einer Partikelgrösse von < 0,5 mm.
2. PBP/BC Material sollte mindestens 2 g aufweisen und die Probe ausgewogen werden. Man erhält daraus das FM.
3. Probe flachausgebreitet auf Schale 24 Stunden bei 105 °C in einen Trockenschrank geben.
4. Probe abkühlen und auswiegen. Daraus ergibt sich die TM.
5. Der Wert für den Wassergehalt ergibt sich als Differenz von FM und TM mal 100/FM.

### Verfahren zur Bestimmung der Kristallinität der Bakteriencellulose

Zur Bestimmung der Kristallinität in einer BC-Probe wird die Röntgenweitwinkelbeugungsmethode (x-ray diffraction; WAXD) herangezogen. Dabei werden starke Signale aus der kristallinen Fraktion der Cellulose zur Messung verwendet. Während nicht kristalline Teile der Cellulosestruktur breitere und wenig verfeinerte Beugungsmuster lieferen. Die Ruland-Vonk-Röntgenbeugungsmethode ermittelt die Kristallinität durch die Trennung von kristallinen und nichtkristallinen Fraktionen bez. der Beugungsintensität. Die Kristallinität einer Probe ergibt sich nach der Ruland-Vonk-Methode durch die Subtraktion der Diffraktogrammfläche einer nicht-kristallinen Zellulose von der Diffraktogrammfläche der zu untersuchenden Probe. Die Kristallinität in % berechnet sich dann durch die Division der verbleibenden Diffraktogrammfläche der kristallinen Cellulose durch die Gesamtfläche der Probe.

(siehe dazu: Overview on native cellulose and microcrystalline Cellulose I Structure studied by X-Ray diffraction (WAXD): Comparison between measurement techniques N.Terinte, Roger Ibbet and K.C. Schuster Lenzinger Berichte 89 (2011) 118-131; X-Ray determination of cristallinity and diffuse disorder scaterring, W.Ruland Acta Crystallogr. 14 (1961) 1180-1185 Computerization of Ruland's X-ray method for determination oft the cristallinity in polymers; C.G. Vonk J.Appl.Crystallogr. 6 (1973) 148-152))

### Verfahren zur Bestimmung der molaren Masse der Bakteriencellulose

Lichtstreuung ist eine verbreitete Methode zur Bestimmung der absoluten Molmassen von Polymeren. Die Methode hat einen breiten Anwendungsbereich und ist für die Bestimmung der Molmasse von BC geeignet. Eingesetzt werden Vielwinkel-Lichtstreuphotometer (Multi Angele Laser Light Scattering, MALLS). Dieses Gerät zeichnet simultan die Streulichtintensität unter 18 verschiedenen Winkeln mit dem Vorteil einer entsprechenden Datenmenge auf. Auftretende Probleme bei der Bestimmung der molaren Masse von BC aufgrund der hohen Molekulargewichte und des hohen Kristallinitätsgrades und der unvollständigen Umsetzung zum Tricarbanilat lässt sich durch den Einsatz des Lösungsmittels Cd-tren lösen.

(siehe dazu: Cellulose Solutions in water containing metal complexes K.Saalwächter, W. Burchard, P.Klüfers, G.Kettenbach.PMayer,D.Klemm,S.Dugarmaa Macromolecules 2000, 33,4094-4107)

### Verfahren zur Bestimmung eines Polymerisationsgrades von Bakteriencellulose

Der Polymerisationsgrad der BC wird viskosimetrisch nach folgendem Verfahren ermittelt: Siehe Abschnitt: Viscosity and degree of polymerisation measurement S.94

(Production and characterisation of microbial cellulosic fibre from Acetobacter xylinum, G Gayathry, G Gopalaswamy, Indian Journal of Fibre & Textile Research Vol. 39; March 2014, pp.93-96, *TAPPI Test Method, T460 om-96 (TAPPI, Atlanta), 1998)

### Verfahren zur Bestimmung der Partikelgröße von PBP und BC

Die Partikelgröße von Partikeln der PBP und/oder des Pflanzenmaterials wird mittels einer Siebanalyse in Trockenform gemessen. Dabei werden beispielsweise PBP-Proben im Trockenofen bei 105 °C getrocknet und anschließend in das Siebsystem verbracht. Das Siebsystem zeichnet sich durch Siebe, die von oben nach unten mit kleiner werdenden Maschenweiten versehen sind, aus. Durch Auswiegen, der jeweiligen Mengen mit identischer Korn-/Partikelgrößen lässt sich eine Partikelgrößenverteilung erstellen. Die volumenverändernden Partikel der BC aufgrund von Quellung sind mittels Laserbeugungsanalyse Partikelgrößenverteilungen zu ermitteln.

### Verfahren zur Bestimmung der Druckfestigkeit des Düngemittels/Düngemittelträgerstoffs

Als Druckfestigkeit wird die Widerstandsfähigkeit eines Werkstoffes bei der Einwirkung von Druckkräften bezeichnet. Druckfestigkeit ist der Quotient aus Bruchlast und Querschnittsfläche A eines Körpers. Härte bezeichnet den Widerstand gegenübereindringenden Körpern. Im Falle des Düngerkorns wird die einaxiale Druckfestigkeit (Prüfkörper kann in beiden seitlichen Richtungen ausweichen) dadurch gemessen, dass die Druckspannung bis zum Punkt der Zerstörung (Druckspannung ist größer als Druckfestigkeit) erhöht wird. Beim Punkt der Zerstörung des Düngemittelkorns übersteigt die Druckspannung die Druckfestigkeit.

## Patentansprüche

1. Düngemittelträgerstoff geeignet zur Speicherung durch Adsorption und zur Abgabe von Wasser und pflanzenverfügbaren Nährstoffen, umfassend einen Anteil an Bakteriencellulose, wobei der Düngemittelträgerstoff biologisch abbaubar ist, **dadurch gekennzeichnet, dass** der Düngemittelträgerstoff einen Anteil an wenigstens einem Pflanzenblattpolymer umfasst, dass das wenigstens eine Pflanzenblattpolymer wenigstens eines oder eine Kombination aus mehreren ausgewählt aus der Gruppe aus pflanzlicher Cellulose und/oder Hemicellulose und/oder Lignin ist, und dass das Pflanzenblattpolymer einen Massenanteil an einem Chlorophyllabbauprodukt non-fluorescent chlorophyll catabolites (NCC) von 0,6 Masse-% bis 1,2 Masse-% in Trockensubstanz aufweist.

2. Düngemittelträgerstoff nach Anspruch 1, **dadurch gekennzeichnet, dass** die Bestandteile des Düngemittelträgerstoffes zu 100% biobasiert sind und/oder dass der Düngemittelträgerstoff bei Kontakt mit Wasser zu einer zeitverzögerten und/oder stufenweisen Abgabe der gespeicherten Nährstoffe führt, beispielsweise derart, dass bei Kontakt mit Wasser eine Initialabgabe von gespeicherten Nährstoffen höchstens 66 % eines Gesamtanteils an gespeicherten Nährstoffen beträgt.

3. Düngemittelträgerstoff nach einem der vorstehenden Ansprüche, **dadurch gekennzeichnet, dass** das wenigstens eine Pflanzenblattpolymer aus der Familie der Angiospermen stammt, beispielsweise wobei in Trockenmasse ein Massenanteil der pflanzlichen Cellulose an einer Gesamtmasse der Pflanzenblattpolymere von 15 Masse-% bis 50 Masse-%, ein Massenanteil der Hemicellulose an der Gesamtmasse der Pflanzenblattpolymere von 3 Masse-% bis 50 Masse-% und ein Massenanteil des Lignins an der Gesamtmasse der Pflanzenblattpolymere von 7 Masse-% bis 20 Masse-% beträgt, und/oder dass der Düngemittelträgerstoff zerkleinertes Pflanzenblattmaterial beinhaltet, in welchem zumindest ein Teil des wenigstens einen Pflanzenblattpolymers enthalten ist, insbesondere wobei das Pflanzenblattmaterial von Herbstblättern mit einem Rotanteil von mindestens 10 % und/oder einem Grünanteil von weniger als 10% und/oder einem Massenanteil an Lignin von mehr als 1 Masse-% in Trockensubstanz und/oder mit einem Anteil an Anthocyanen am Gesamtanteil von im Pflanzenblattmaterial enthaltenen Pflanzenfarbstoffe von 10% bis 100% stammt.

4. Düngemittelträgerstoff nach einem der vorstehenden Ansprüche, **dadurch gekennzeichnet, dass** der Düngemittelträgerstoff einen Massenanteil des wenigstens einen Pflanzenblattpolymers und/oder des Pflanzenblattmaterials von 70 Masse-% bis 99 Masse-%, einen Massenanteil der Bakteriencellulose von 1 Masse-% bis 15 Masse-% und einen Massenanteil von Wasser und/oder einem weiteren Bestandteil von 0 Masse-% bis 15 Masse-% aufweist und/oder dass die Bakteriencellulose eine Kristallinität Xc von 75% bis 95% aufweist und/oder dass ein Polymerstrang der Bakteriencellulose eine molare Masse von wenigstens 50 × 10⁴ g/mol hat und/oder dass die Bakteriencellulose einen Polymerisationsgrad von wenigstens 1000 aufweist und/oder dass 99 Massen-% eines Feuchtgewichtes der Bakteriencellulose Wasser und 1 Masse-% Cellulosefasern ausmachen.

5. Verfahren zur Herstellung eines Düngemittels, umfassend die Schritte:
- Bereitstellen von Pflanzenblättern, insbesondere von Herbstblättern,
- Trocknung der Pflanzenblätter bis ein Massenanteil an Wasser der Pflanzenblätter von maximal 25 Masse-%, insbesondere maximal 20 Masse-%, insbesondere maximal 15 Masse-%, insbesondere maximal 10 Masse-%, insbesondere maximal 5 Masse-%, erreicht ist,
- Zerkleinern der Pflanzenblätter zu einem Pflanzenblattmaterial mit Partikelgrößen, insbesondere durchschnittlichen Partikelgrößen, von 0,1 mm bis 2 mm, insbesondere von 0,2 bis 1 mm
- Bereitstellen von Bakteriencellulose,
- Zerkleinern der Bakteriencellulose in Partikel mit einer Größe, insbesondere einer durchschnittlichen Größe, von 0,1 mm bis 3 mm, insbesondere von 0,5 mm bis 2,5 mm, insbesondere von 1 mm bis 2 mm,
- Trocknung der Bakteriencellulose, insbesondere durch einen Filterschritt, so dass der Massenanteil von Wasser an den Partikeln auf maximal 60 Massen-%, insbesondere maximal 50 Massen-%, insbesondere maximal 40 Massen-%, insbesondere maximal 30 Massen-%, gesenkt wird,
- Vermischen des Pflanzenblattmaterials und der Bakteriencellulose,
- Einlegen des zerkleinerten Pflanzenblattmaterials und der Bakteriencellulose-Partikel in eine Pflanzennährstofflösung, insbesondere in eine organische Pflanzennährstofflösung mit pflanzenverfügbarem Stickstoff, bis die Pflanzennährstofflösung durch das Pflanzenblattmaterial aufgenommen wurde, vorzugsweise über einen Zeitraum von mehreren Tagen, zur Herstellung eines Pflanzenblatt-Nährstoffmaterials,
- Trocknung des Pflanzenblatt-Nährstoffmaterials und der Bakteriencellulose-Nährstoff-Partikel, insbesondere bis zu einem Wassergehalt von maximal 15 Masse-%, insbesondere von maximal 10 Masse-%, insbesondere von maximal 5 Masse-%, insbesondere von weniger als 1 Masse-% oder 0 Masse-%.

6. Verfahren zur Herstellung eines Düngemittels nach Anspruch 5, **dadurch gekennzeichnet, dass** das Pflanzenblatt-Nährstoffmaterial und die Bakteriencellulose-Nährstoff-Partikel zur Herstellung des Düngemittels vermischt werden, vorzugsweise wobei ein Massenanteil des Pflanzenblatt-Nährstoffmaterials von 70 Masse-% bis 99 Masse-%, ein Massenanteil der Bakteriencellulose-Nährstoff-Partikel von 1 Masse-% bis 15 Masse-% und ein Massenanteil von Wasser, insbesondere nach Durchführung eines Trocknungsschrittes, und/oder einem weiteren Bestandteil von 0 Masse-% bis 15 Masse-% beträgt.

7. Verfahren zur Herstellung eines Düngemittels nach einem der vorstehenden Ansprüche 5 oder 6, **dadurch gekennzeichnet, dass** das Pflanzenblatt-Nährstoffmaterial und die Bakteriencellulose-Nährstoff-Partikel, insbesondere zusammen mit Wasser, zu einem Breigemisch vermischt werden, vorzugsweise wobei ein Massenanteil des Wassers an dem Breigemisch wenigstens 60 Masse-% beträgt, und/oder dass die Mischung aus Pflanzenblatt-Nährstoffmaterial und Bakteriencellulose-Nährstoff-Partikeln in Form gepresst werden und/oder dass das Breigemisch, insbesondere nach einer Ausformung, getrocknet wird.

8. Düngemittel, insbesondere vollständig biologisch abbaubares Düngemittel, umfassend einen Düngemittelträgerstoff nach einem der Ansprüche 1 bis 4 und/oder hergestellt nach einem Verfahren gemäß einem der Ansprüche 5 bis 7, wobei das Düngemittel pflanzenverfügbaren mineralisierten Stickstoff enthält.

9. Düngemittel nach Anspruch 8, **dadurch gekennzeichnet, dass** die Bestandteile des Düngemittels zu 100% biobasiert sind, vorzugsweise wobei eine Bestimmung der Biobasiertheit durch die ¹⁴C-Methode erfolgt.

10. Düngemittel nach Anspruch 8 oder 9, **dadurch gekennzeichnet, dass** das Düngemittel eine streufähige Körnerform aufweist, insbesondere derart, dass ein Durchmesser, insbesondere ein mittlerer Wert eines Durchmessers, der einzelnen Körner wenigstens 1,5 mm, insbesondere wenigstens 2 mm, insbesondere von 2 mm bis 4 mm, beträgt und/oder dass ein Volumen, insbesondere ein durchschnittliches Volumen, der Körner jeweils wenigstens 10 mm³ beträgt und/oder dass eine Dichte der Körner jeweils wenigstens 0,01 g/mm³ und/oder maximal 0,03 g/mm³ beträgt.

11. Düngemittel nach einem der Ansprüche 8 bis 10, **dadurch gekennzeichnet, dass** die Körner eine abgerundete Form aufweisen und/oder dass die Körner eine Fließfähigkeit von wenigstens 2,5 kg pro Minute aufweisen, beispielsweise wobei die Fließfähigkeit mittels eines standardisierten Trichters nach EN 13299 bestimmt ist.

12. Düngemittel nach einem der vorstehenden Ansprüche 8 bis 11, **dadurch gekennzeichnet, dass** die Körner jeweils eine Druckfestigkeit von mindestens 15 N aufweisen und/oder dass das Düngemittel Staub in einen Massenanteil von maximal 1 Masse-% aufweist.

13. Verwendung eines Düngemittelträgerstoffs nach einem der Ansprüche 1 bis 4 zur Speicherung durch Adsorption und Abgabe von Wasser und pflanzenverfügbaren Nährstoffen.

14. Verwendung des Düngemittels nach einem der Ansprüche 8 bis 12 zur Düngung eines Anbaubodens durch Verstreuen des Düngemittels.

15. Verwendung nach Anspruch 14, **dadurch gekennzeichnet, dass** das Düngemittel mittels einer Düngerstreuvorrichtung verstreut wird und/oder dass das Düngemittel eine Körnerform aufweist, insbesondere wobei die Körner jeweils eine Druckfestigkeit von mindestens 15 N aufweisen.

## Claims

1. Fertilizer carrier suitable for storing by adsorption and for delivering water and plant-available nutrients, comprising a fraction of bacterial cellulose, the fertilizer carrier being biodegradable, **characterized in that** the fertilizer carrier comprises a fraction of at least one plant leaf polymer, **in that** the at least one plant leaf polymer is at least one or a combination of two or more selected from the group of plant cellulose and/or hemicellulose and/or lignin, and **in that** the plant leaf polymer has a mass fraction of a chlorophyll degradation product, non-fluorescent chlorophyll catabolites (NCCs) of 0.6% by mass to 1.2% by mass in dry matter.

2. Fertilizer carrier according to Claim 1, **characterized in that** the constituents of the fertilizer carrier are 100% biobased and/or **in that** the fertilizer carrier on contact with water leads to retarded and/or gradual delivery of the stored nutrients, for example in such a way that on contact with water an initial delivery of stored nutrients is at most 66% of a total fraction of stored nutrients.

3. Fertilizer carrier according to either of the preceding claims, **characterized in that** the at least one plant leaf polymer comes from the family of the angiosperms, for example wherein in dry mass a mass fraction of the plant cellulose in a total mass of the plant leaf polymers is from 15% by mass to 50% by mass, a mass fraction of the hemicellulose in the total mass of the plant leaf polymers is from 3% by mass to 50% by mass and a mass fraction of the lignin in the total mass of the plant leaf polymers is from 7% by mass to 20% by mass, and/or **in that** the fertilizer carrier contains comminuted plant leaf material in which at least part of the at least one plant leaf polymer is included, more particularly wherein the plant leaf material comes from autumn leaves having a red fraction of at least 10% and/or a green fraction of less than 10% and/or a mass fraction of lignin of more than 1% by mass in dry matter and/or having a fraction of anthocyanins in the total fraction of plant colourants included in the plant leaf material of 10% to 100%.

4. Fertilizer carrier according to any of the preceding claims, **characterized in that** the fertilizer carrier has a mass fraction of the at least one plant leaf polymer and/or of the plant leaf material of 70% by mass to 99% by mass, a mass fraction of the bacterial cellulose of 1% by mass to 15% by mass and a mass fraction of water and/or a further constituent of 0% by mass to 15% by mass and/or **in that** the bacterial cellulose has a crystallinity Xc of 75% to 95% and/or **in that** a polymer strand of the bacterial cellulose has a molar mass of at least 50 × 10⁴ g/mol and/or **in that** the bacterial cellulose has a degree of polymerisation of at least 1000 and/or **in that** 99% by mass of a wet weight of the bacterial cellulose is accounted for by water and 1% by mass by cellulose fibres.

5. Method for producing a fertilizer, comprising the steps of:
- providing plant leaves, more particularly autumn leaves,
- drying the plant leaves until a mass fraction of water in the plant leaves reaches not more than 25% by mass, more particularly not more than 20% by mass, more particularly not more than 15% by mass, more particularly not more than 10% by mass, more particularly not more than 5% by mass,
- comminuting the plant leaves to a plant leaf material having particle sizes, more particularly average particle sizes, of 0.1 mm to 2 mm, more particularly of 0.2 to 1 mm,
- providing bacterial cellulose,
- comminuting the bacterial cellulose into particles having a size, more particularly an average size, of 0.1 mm to 3 mm, more particularly of 0.5 mm to 2.5 mm, more particularly of 1 mm to 2 mm,
- drying the bacterial cellulose, more particularly by a filtering step, so that the mass fraction of water in the particles is lowered to not more than 60% by mass, more particularly not more than 50% by mass, more particularly not more than 40% by mass, more particularly not more than 30% by mass,
- mixing the plant leaf material and the bacterial cellulose,
- inserting the comminuted plant leaf material and the bacterial cellulose particles into a plant nutrient solution, more particularly into an organic plant nutrient solution with plant-available nitrogen, until the plant nutrient solution has been taken up by the plant leaf material, preferably over a period of multiple days, for producing a plant leaf nutrient material,
- drying the plant leaf nutrient material and the bacterial cellulose-nutrient particles, more particularly to a water content of not more than 15% by mass, more particularly of not more than 10% by mass, more particularly of not more than 5% by mass, more particularly of less than 1% by mass or 0% by mass.

6. Method for producing a fertilizer according to Claim 5, **characterized in that** the plant leaf nutrient material and the bacterial cellulose-nutrient particles are mixed for producing the fertilizer, preferably wherein a mass fraction of the plant leaf nutrient material is from 70% by mass to 99% by mass, a mass fraction of the bacterial cellulose-nutrient particles is from 1% by mass to 15% by mass and a mass fraction of water, more particularly after implementation of a drying step, and/or of a further constituent is from 0% by mass to 15% by mass.

7. Method for producing a fertilizer according to either of preceding Claims 5 or 6, **characterized in that** the plant leaf nutrient material and the bacterial cellulose-nutrient particles are mixed, more particularly together with water, to give a pasty mixture, preferably wherein a mass fraction of the water in the pasty mixture is at least 60% by mass, and/or **in that** the mixture of plant leaf nutrient material and bacterial cellulose-nutrient particles are pressed into shape and/or **in that** the pasty mixture, more particularly after a shaping operation, is dried.

8. Fertilizer, more particularly fully biodegradable fertilizer, comprising a fertilizer carrier according to any of Claims 1 to 4 and/or produced by a method according to any of Claims 5 to 7, wherein the fertilizer comprises plant-available mineralized nitrogen.

9. Fertilizer according to Claim 8, **characterized in that** the constituents of the fertilizer are 100% biobased, preferably wherein the biobased content is determined by the ¹⁴C method.

10. Fertilizer according to Claim 8 or 9, **characterized in that** the fertilizer has a broadcastable granule form, more particularly in such a way that a diameter, more particularly a mean value of a diameter, of the individual granules is at least 1.5 mm, more particularly at least 2 mm, more particularly from 2 mm to 4 mm, and/or that a volume, more particularly an average volume, of the granules is in each case at least 10 mm³ and/or that a density of the granules is in each case at least 0.01 g/mm³ and/or not more than 0.03 g/mm³.

11. Fertilizer according to any of Claims 8 to 10, **characterized in that** the granules have a rounded shape and/or **in that** the granules have a flowability of at least 2.5 kg per minute, for example wherein the flowability is determined by means of a standardized funnel according to EN 13299.

12. Fertilizer according to any of preceding Claims 8 to 11, **characterized in that** the granules each have a compressive strength of at least 15 N and/or **in that** the fertilizer comprises dust in a mass fraction of not more than 1% by mass.

13. Use of a fertilizer carrier according to any of Claims 1 to 4 for storing by adsorption and delivering water and plant-available nutrients.

14. Use of the fertilizer according to any of Claims 8 to 12 for fertilizing a cultivation soil by scattering of the fertilizer.

15. Use according to Claim 14, **characterized in that** the fertilizer is scattered by means of a fertilizer broadcaster and/or **in that** the fertilizer has a granule shape, more particularly wherein the granules each have a compressive strength of at least 15 N.

## Revendications

1. Matière support d'engrais appropriée pour la rétention par adsorption et pour l'émission d'eau et de nutriments assimilables par les plantes, comprenant une partie de cellulose bactérienne, laquelle matière support d'engrais est biodégradable, **caractérisée en ce que** cette matière support d'engrais comprend une partie d'au moins un polymère de feuilles végétales, que l'au moins un polymère de feuilles végétales est constitué par au moins de la cellulose végétale et/ou de l'hémicellulose et/ou de la lignine et que le polymère de feuilles végétales présente une proportion de 0,6% en masse à 1,2% en masse d'un produit de décomposition chlorophyllienne dit "catabolite chlorophyllien non fluorescent" (CCN).

2. Matière support d'engrais selon la revendication 1, **caractérisée en ce que** les composants de cette matière support d'engrais sont biologiques à 100% et/ou que cette matière support d'engrais produit, lorsqu'elle est en contact avec de l'eau, une émission temporisée et/ou progressive des nutriments, de sorte que, par exemple, un contact avec de l'eau peut donner lieu à émission initiale de nutriments stockées égale à 66% maximum de la quantité totale de nutriments stockés.

3. Matière support d'engrais selon une des revendications précédentes, **caractérisée en ce que** l'au moins un polymère de feuilles végétales provient de la famille des angiospermes, la proportion en masse sèche de la cellulose végétale représentant par exemple entre 15% et 50% de la masse totale de polymère de feuilles végétales, la proportion en masse de l'hémicellulose représentant entre 3% et 50% de la masse totale de polymère de feuilles végétales et la proportion en masse de la lignine végétale représentant entre 7% et 20% de la masse totale de polymère de feuilles végétales, et que cette matière support d'engrais contient de la matière de feuilles végétales broyées dans laquelle au moins une partie de l'au moins un polymère de feuilles végétales est contenue, la matière de feuilles végétales provenant en particulier de feuilles d'automne avec une proportion de feuilles rouges d'au moins 10% et une proportion de feuilles vertes de moins de 10% et/ou une proportion en masse de lignine de plus de 1% en matière sèche et/ou avec une proportion d'anthocyanes représentant entre 10% et 100% des colorants végétaux contenus dans la matière de feuilles végétales.

4. Matière support d'engrais selon une des revendications précédentes, **caractérisée en ce que** cette matière support d'engrais présente une proportion de l'au moins un polymère de feuilles végétales et/ou de matière de feuilles végétales de 70% en masse à 99% en masse, une proportion de cellulose bactérienne de 1% en masse à 15% en masse et une proportion d'eau et/ou d'un autre composant de 0% en masse à 15% en masse et/ou que la cellulose bactérienne présente une cristallinité Xc de 75% à 95% et/ou qu'un brin polymère de la cellulose bactérienne a une masse molaire d'au moins 50 × 10⁴ g/mol et/ou que la cellulose bactérienne présente un taux de polymérisation d'au moins 1000 et/ou que 99% en masse d'un poids humide de la cellulose bactérienne provient de l'eau et 1% en masse de fibres de cellulose.

5. Procédé pour produire un engrais, comprenant les étapes suivantes :
- préparation de feuilles végétales, en particulier de feuilles d'automne,
- séchage des feuilles végétales jusqu'à ce qu'une teneur en eau des feuilles végétales de 25% en masse maximum, en particulier de 20% en masse maximum, en particulier de 15% en masse maximum, en particulier de 10% en masse maximum, en particulier de 5% en masse maximum soit atteinte,
- broyage des feuilles végétales jusqu'à obtenir une matière de feuilles végétales avec des tailles de particules, en particulier des tailles moyennes de particules, de 0,1 mm à 2 mm, en particulier de 0,2 mm à 1 mm.
- préparation de la cellulose bactérienne,
- broyage de la cellulose bactérienne en particules d'une taille, en particulier d'une taille moyenne de 0,1 mm à 3 mm, en particulier de 0,5 mm à 2,5 mm, en particulier de 1 mm à 2 mm,
- séchage de la cellulose bactérienne, en particulier par une étape de filtrage, de sorte que la proportion en masse de l'eau dans les particules tombe à 60% en masse maximum, en particulier à 50% en masse maximum, en particulier à 40% en masse maximum en particulier à 30% en masse maximum,
- mélange de la matière de feuilles végétales et de la cellulose bactérienne,
- ajout de la matière de feuilles végétales broyées et des particules de cellulose bactérienne dans une solution nutritive pour plantes, en particulier dans une solution nutritive pour plantes avec de l'azote disponible pour les plantes, jusqu'à ce que la solution nutritive pour plantes ait été absorbée par la matière de feuilles végétales, en particulier sur une durée de plusieurs jours, pour produire un engrais à base de feuilles végétales,
- séchage de la matière nutritive à base de feuilles végétales et des particules nutritives à base de cellulose bactérienne, en particulier jusqu'à obtenir une teneur en eau de 15% en masse maximum, en particulier de 10% en masse maximum, en particulier de 5% en masse maximum, en particulier de moins de 1% en masse ou 0% en masse.

6. Procédé pour produire un engrais selon la revendication 5, **caractérisé en ce que** la matière nutritive à base de feuilles végétales et les particules nutritives à base de cellulose bactérienne sont mélangées pour produire un engrais, de préférence une proportion en masse de la matière nutritive à base de feuilles végétales étant de 70% en masse à 99% en masse, une proportion en masse des particules nutritives à base de cellulose bactérienne étant de1% en masse à 15% en masse et une proportion en masse de l'eau, en particulier après la réalisation d'une étape de séchage, et/ou d'un autre composant étant de 0% en masse à 15% en masse.

7. Procédé pour produire un engrais selon une des revendications précédentes 5 ou 6, **caractérisé en ce que** la matière nutritive à base de feuilles végétales et les particules nutritives à base de cellulose bactérienne sont mélangées, en particulier avec de l'eau, pour obtenir une bouillie, une proportion en masse de l'eau dans la bouillie étant de préférence d'au moins 60%, et/ou que le mélange de la matière nutritive à base de feuilles végétales et des particules nutritives à base de cellulose bactérienne est pressé dans un moule et/ou que la bouillie est séchée, en particulier après un démoulage.

8. Engrais, en particulier engrais totalement biodégradable, comprenant une matière support d'engrais selon une des revendications 1 à 4 et/ou fabriqué d'après un procédé selon une des revendications 5 à 7, cet engrais contenant de l'azote minéralisé disponible pour les plantes.

9. Engrais selon la revendication 8, caractérisé en en ce que les composants de cet engrais sont biologiques à 100%, une estimation de l'aspect biologique étant de préférence effectuée par la méthode ¹⁴C.

10. Engrais selon la revendication 8 ou 9, **caractérisé en ce que** cet engrais se présente sous la forme de granulés épandables, en particulier de sorte qu'un diamètre, en particulier une valeur moyenne d'un diamètre des granulés individuels est d'au moins 1,5 mm, en particulier d'au moins 2 mm, en particulier de 2 mm à 4 mm et/ou qu'un volume, en particulier un volume moyen des granulés individuels est d'au moins 10 mm³ et/ou qu'une densité des granulés individuels est d'au moins 0,01 g/mm³ et/ou de 0,03 g/mm³ maximum.

11. Engrais selon une des revendications 8 à 10, **caractérisé en ce que** les granulés offrent une forme arrondie et/ou que les granulés présentent une fluidité d'au moins 2,5 kg par minute, la fluidité étant par exemple définie au moyen d'une trémie normalisée selon EN 13229.

12. Engrais selon une des revendications 8 à 11, **caractérisé en ce que** les granulés individuels présentent une résistance à la compression d'au moins 15 N et/ou que l'engrais présente une proportion en masse de poussière de 1% en masse maximum.

13. Utilisation d'une matière support d'engrais selon une des revendications 1 à 4 pour la rétention par adsorption et l'émission d'eau et de nutriments assimilables par les plantes

14. Utilisation de l'engrais selon une des revendications 8 à 12 pour l'engraissage d'un sol agricole en épandant l'engrais.

15. Utilisation selon la revendication 14, **caractérisée en ce que** l'engrais est épandu au moyen d'un dispositif d'épandage d'engrais et/ou que l'engraisse présente sous la forme de granulés, les granulés individuels présentant en particulier une résistance à la compression d'au moins 15 N.
